(19) Europäisches Patentamt
European Patent Office
Office européen des brevets

(11) EP 0 567 831 B1

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.[7]: **C08L 63/00**, C09D 163/00, C09J 163/00, C08G 59/18

(21) Anmeldenummer: **93105929.9**

(22) Anmeldetag: **13.04.1993**

(54) **Härtungsmittel für wässrige Epoxidharzdispersionen, Verfahren zu dessen Herstellung und dessen Verwendung**

Hardener for aqueous dispersion of epoxy resin, process for producing it and its use

Durcisseur pour dispersion aqueuse de résine époxy, procédé de sa préparation et son utilisation

(84) Benannte Vertragsstaaten:
**AT BE CH DE DK ES FR GB GR IT LI LU NL PT SE**

(30) Priorität: **28.04.1992 CH 135592**

(43) Veröffentlichungstag der Anmeldung:
**03.11.1993 Patentblatt 1993/44**

(73) Patentinhaber: **Sika Schweiz AG**
**8048 Zürich (CH)**

(72) Erfinder: **Bütikofer, Pierre-André, Dr.**
**CH-8335 Hittnau (CH)**

(74) Vertreter: **Blum, Rudolf Emil Ernst et al**
**c/o E. Blum & Co**
**Patentanwälte**
**Vorderberg 11**
**8044 Zürich (CH)**

(56) Entgegenhaltungen:
**DE-A- 2 106 320** **FR-A- 2 541 295**

- **DATABASE WPI,Derwent Publications Ltd, London (GB),Class A23 ,AN 79-46821 B**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

HINTERGRUND DER ERFINDUNG

Es ist bekannt, dass die Epoxidgruppe mit Verbindungen mit aktivem Wasserstoffatom, wie zum Beispiel Alkoholen, Phenolen, Säuren, Aminen oder Mercaptoverbindungen nach dem folgenden Schema reagiert:

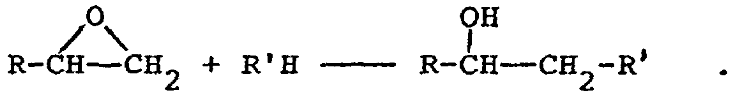

Dementsprechend sind Epoxidharze unter Verwendung von Härtern, die reaktive Wasserstoffatome aufweisen, zu Polymerprodukten vernetzbar, und als Härter für Epoxidharze werden derzeit beispielsweise die folgenden Verbindungen mit aktivem Wasserstoffatom verwendet:

Dicarbonsäuren und Polycarbonsäuren, Polyalkohole, Polyphenole, Di- und Polyamine und Polymercaptane. Es sei in diesem Zusammenhang beispielsweise auf Ullmanns Encyklopädie der technischen Chemie, Band 10, 1975, Seiten 567 - 577 verwiesen, und insbesondere Seite 570, Tabelle 6, in welcher die diversen Vernetzungsreaktionen schematisch dargestellt sind.

Trotz der grossen Anzahl an Härtern, die in der Literatur für Epoxidharze beschrieben werden, sind viele derartige Systeme ungeeignet, wenn das Epoxidharz in einer speziellen Form vorliegen soll, beispielsweise als Epoxidharzdispersion, beziehungsweise wenn das Epoxidharz für eine bestimmte Anwendung vorgesehen ist.

Besonders schwer sind diese Probleme, wenn die Härtung des Epoxidharzes in einem System vorgenommen wird, das noch weitere Komponenten enthält, wie zum Beispiel Füllstoffe, Pigmente, Emulgiermittel und ähnliche. Wird das Epoxidharz in einem System eingesetzt, welches anorganische Bindemittel, wie Zement oder Kalk, und allenfalls noch Zusatzstoffe enthält, wie zum Beispiel Betonzusatzmittel, dann treten zusätzliche Schwierigkeiten aufgrund der alkalischen Reaktion der erwähnten anorganischen Bindemittel und weiterer Komponenten auf, die in derartigen Zusammensetzungen enthalten sein können, sodass bisher noch keine Härtungsmittel zur Verfügung standen, die alle die gesetzten Anforderungen erfüllen.

Es besteht jedoch ein grosses Interesse, gewisse technologische Eigenschaften zementgebundener Mörtel durch Beigabe verschiedener Zusätze, einschliesslich Polymermaterialien, wie Kunststoffen, zu verbessern. Durch solche Zusätze wird beispielsweise angestrebt:

- eine leichtere Verarbeitbarkeit bei einem günstigen Wasser/Zement-Faktor
- die Unterdrückung von Entmischungsvorgängen wie Absetzen oder Bluten und der schädlichen Zementhautbildung an der Oberfläche
- eine Steigerung des Wasserrückhaltevermögens
- ein höherer Widerstand gegen die sogenannte Carbonatisierung und gegen Frost- und Tausalzschädigung.
- eine hervorragende Haftung auf alten Betonflächen und anderen bauüblichen Untergründen, sowie auf Eisen - auch bei geringer Schichtstärke.

Schon seit langer Zeit werden Zementmörteln Polymermaterialien auf Basis von thermoplastischen Kunststoffen zugesetzt. In der nachfolgenden Tabelle sind die Zeitpunkte, ab welchen etwa die entsprechenden Thermoplaste den Zementmischungen zugegeben wurden und auch die Nachteile, welche die entsprechenden Produkte aufweisen, zusammengefasst:

| Seit etwa | Thermoplastischer Kunststoff und dessen Nachteile |
|---|---|
| 1950 | Polyvinylacetat-Polymerisate, die in der hohen Alkalinität der Zementsuspension rasch verseifen. |
| 1958 | Styrol-Butadien-Polymerisate, die eine geringe Beständigkeit gegen UV-Licht aufweisen. |
| 1970 | Styrol-Acrylat-Polymerisate, die befriedigende Beständigkeit gegen Verseifung und UV-Licht zeigen. |

Durch die Zugabe von Dispersionen derartiger thermoplastischer Kunststoffe war jedoch die Entwicklung einer Reihe von polymermodifizierten Zementmörteln möglich, die basierend auf der englischen Bezeichnung "Polymer Cement Concrete" als PCC-Produkte bezeichnet werden. Die entsprechenden Produkte weisen im Vergleich zu Produkten ohne Zugabe einer Thermoplastdispersion eine Verbesserung verschiedener Eigenschaften auf. Sie sind anwenderfreundlich und auch relativ kostengünstig. Zementmörtel werden jedoch häufig drastischen Umweltbedingungen unterworfen, wie zum Beispiel starken Temperaturschwankungen, Wassereinwirkung, Ultraviolettlicht, chemische

Belastung und ähnliches, und entsprechende Produkte, bei deren Herstellung thermoplastische Dispersionen zugegeben wurden, zeigen unter diesen Bedingungen oft beträchtliche Nachteile.

Thermoplastdispersionen enthalten im allgemeinen Emulgatoren, Schutzkolloide und/oder Koaleszenzmittel, und sie sind daher während der Lagerung und oft sogar bei der Verwendung der entsprechenden Baustoffe im ausgehärteten Zustand in feuchter Umgebung durch mikrobielle Angriffe gefährdet.

Bekanntlich werden Baustoffe witterungsbedingt sehr hohen Temperaturschwankungen unterworfen und auch in diesem Zusammenhang sind entsprechende PCC-Produkte nicht befriedigend.

Die meisten Thermoplast-Dispersionen sind bei der Gebrauchstemperatur weich. Die Glasübergangstemperatur, abgekürzt als $T_G$ liegt im allgemeinen im Bereich von +30 bis -30° C. Häufig wird die minimale Filmbildungstemperatur, abgekürzt als "MFT" derartiger Thermoplastharze durch die Zugabe von Koaleszenzmitteln, welche eine Quellung des Thermoplasten bewirken, günstig beeinflusst. Die entsprechenden Koaleszenzmittel, nämlich im allgemeinen sorgfältig ausgewählte schwer flüchtige organische Lösungsmittel, sollen jedoch nach Erreichung der Filmbildung aus dem Baustoff allmählich abdampfen. Es zeigte sich jedoch, dass bei dickschichtiger Applikation das Koaleszenzmittel den gebildeten Thermoplastfilm aber nicht mehr verlassen kann. Sogar wenn ein Polymerisat mit relativ hohem $T_G$ eingesetzt wird, bleibt dann aus diesem Grund der Thermoplastfilm weich. Wird als thermoplastischer Kunststoff eine acrylathaltige Dispersion dem Mörtel oder Beton zugesetzt, dann kann, wie bereits erwähnt, bei langdauernder Wasserbelastung ausserdem noch eine Verseifung der Estergruppierungen unter Bildung von Carbonsäuregruppierungen auftreten, und dadurch wird das thermoplastische Polymer hydrophiler, quillt auf und wird noch weicher. Die erwähnten Nachteile von Mörteln, die Dispersionen von thermoplastischen Kunststoffen enthalten, dürften der Grund dafür gewesen sein, warum schon ab etwa 1960 Versuche unternommen wurden, entsprechenden Produkten statt thermoplastischen Kunststoffen Epoxidharzdispersionen zuzusetzen.

## BESCHREIBUNG DES STANDES DER TECHNIK

Epoxidharzdispersionen werden seit langer Zeit und mit grossem Erfolg zur Beschichtung verschiedener Substrate, insbesondere in Anstrichmitteln verwendet. Härtungsmittel, die für derartige Epoxidharzdispersionen eingesetzt werden, enthalten grosse Anteile an Komponenten, die eine starke emulgierende Wirkung zeigen. Bei der Aushärtung der entsprechenden Epoxidharz dispersionen werden jedoch diese emulgierend wirkenden Komponenten durch Vernetzungsreaktionen weitgehend oder nahezu vollständig in das vernetzte Polymerprodukt eingebaut, sodass in dem ausgehärteten Harz nur geringfügige Mengen an freiem Emulgator enthalten sind.

Filme, die unter Verwendung derartiger Epoxidharzdispersionen hergestellt werden, haben eine hornartige Beschaffenheit. Sie erreichen Glasübergangstemperaturen $T_G$ von bis zu etwa +50° C und die entsprechenden gehärteten Filme quellen auch in stark alkalischen wässrigem Milieu nur sehr wenig. Alle diese Eigenschaften sind für Kunststoffdispersionen, die als Zusatz für Zementmörtel vorgesehen sind, sehr wünschenswert. Dennoch waren die ersten Versuche, die unternommen wurden, Kombinationen aus wässrigen Epoxidharzdispersionen und Härtungsmitteln, vorzugsweise wässrigen Dispersionen von Härtungsmitteln, in derartigen Systemen zur Verbesserung der technologischen Eigenschaften der entsprechenden Betone oder Mörtel einzusetzen, nicht erfolgreich.

Die Ursachen für die beobachteten Schwierigkeiten sind ziemlich komplex. So werden beispielsweise zementchemische Vorgänge, die zum Erhärten des Mörtels führen, sehr schnell in empfindlicher Weise durch Zusätze gestört, die in der Epoxid-Chemie üblich sind.

Im Handel sind viele Härter und Härtungssysteme für Epoxidharze erhältlich, die gute emulgierende Wirkungen aufweisen, beziehungsweise in wasserverdünnter Form erhältlich sind. Die guten emulgierenden Eigenschaften der entsprechenden Härter werden dadurch erreicht, dass sie Amin-Komponenten mit sowohl hydrophilen als hydrophoben Eigenschaften enthalten, wie zum Beispiel modifizierte (Fett)säureamidpolyamine, aminterminierte Polyacrylate, und Isocyanat- oder Epoxidharzaddukte, die mit Aminogruppen substituiert sind, und diese Amine durch Zugabe von Säuren in kationische Emulgatoren übergeführt werden. Derartige Härter für Epoxidharze werden beispielsweise in den folgenden Patentschriften:

US 3'956'208
DE 2'627'070
US 4'123'402
JP 54'148'025
US 4'179'418
EP 10'318
JP 58'023'823
US 4'489'179
US 4'539'347

und ferner auch in "Epoxy Resins - Chemistry and Technology" von C.A. May, Ed., Marcel Dekker, Inc., Basel 1988, Seite 498, beschrieben.

Diese bekannten Härtungssysteme erwiesen sich jedoch für solche Epoxidharzdispersionen als ungeeignet, die als Zusatz zu Zementmörteln vorgesehen sind. In derartigen Systemen liegen durch die Anwesenheit der anorganischen Bindemittel (beispielsweise Zement und Flugasche) stark alkalische Bedingungen vor, sodass aus den erwähnten kationischen Emulgatoren auf Basis von Aminsalzen, die freien Amine freigesetzt werden. Diese chemische Umwandlung der kationischen Emulgatoren führt zu einem Brechen der Emulsion, insbesondere dann, wenn in den Zementmörtelmischungen noch übliche Zusatzstoffe enthalten sind, wie Verflüssiger, Hochleistungsverflüssiger, Entschäumer und ähnliche Produkte. Einige der Härter und Härtungssysteme, die in den oben genannten Veröffentlichungen beschrieben sind, weisen ausserdem in ihrer Struktur Estergruppen auf, die unter den herrschenden alkalischen Bedingungen rasch verseifen.

Derartige Mörtelmischungen zeigen daher schon während der Verarbeitung aber auch nach der Aushärtung keine befriedigenden Eigenschaften.

DE 2'815'706 beschreibt die Verwendung von wasserlöslichen Epoxidharzen aus der Gruppe der Polyglycidylether von Polyolen, wie Polyglycerin, Trimethylolpropan, Pentaerythritol, Polyglycolen, u.a., die mit wasserlöslichen Polyalkylenpolyaminen, wie Diäthylentriamin, abgekürzt als "DETA", Triethylentetramin, abgekürzt als "TETA" oder ähnlichen, zu deutlichen Verbesserungen der mechanischen Eigenschaften von Zementmassen führt. Aber auch Hydantantoin-Epoxidharze, wie sie zur Formulierung von Klebemittel für feuchten Beton in CH 471'811 beschrieben sind, könnten aus technischer Sicht zur Formulierung verwendet werden.

Derartige Systeme haben aber eine Reihe von schwerwiegenden Nachteilen, die sie daher als ungeeignet erscheinen lassen. Beispielsweise können solche Harze nicht mit Wasser vorverdünnt werden, da sie sonst schon weitgehend während der Lagerung hydrolysieren und damit unbrauchbar werden. Da Wasser stark beschleunigend auf die Amin-Epoxid-Reaktion einwirkt, ist das Pot-life meist sehr kurz. Bei wässrigen Dimethylhydantoindiglycidylether/ Polyaminmischungen, wie sie früher oft zur Verfestigung von Sandstein oder morschem Holz eingesetzt wurden, kann mit einer grösseren Menge von Säure das Pot-life verlängert werden. Eine derartige Mischung stört aber die zementchemischen Prozesse im Mörtel viel zu stark.Zudem dürfen heute praktisch alle derartigen Harze im Baustellenbereich aus toxikologischen Gründen nicht mehr eingesetzt werden.

Der Verwendung von Epoxidharzdispersionen und Polyaminen, die wasserlöslich sind, steht entgegen, dass derartige Polyamine starke Emulsionsbrecher sind.

Es können wasserlösliche Polyamin-Epoxidharzaddukte hergestellt werden, die auch ohne Säurezugabe im Prinzip nicht zu schnell mit dem Epoxidharz reagieren und auch nicht direkt brechend auf die Dispersion einwirken.

Trotzdem werden auch solche Systeme rasch instabil, da die kolloidal gelösten Teilchen durch Addition der hydrophoben Harzmoleküle rasch verkleben und ausflocken.

Ende der 70er Jahre ermöglichte eine neue Generation Härter erstmals die Formulierung von Mörteln, die mit Epoxidharzdispersionen vergütet waren. Diese Mörtel zeigten ein deutlich höheres Leistungsprofil als Mörtel, die mit Thermoplast-Dispersionen modifiziert sind.

Heute haben sich diese neuen Baustoffe als Spezialität weitgehend etabliert und werden meist kurz als ECC-Mörtel bezeichnet (Abkürzung der international gebräulichen englischen Bezeichnung Epoxy-Cement-Concrete). Eine Einführung zu diesem Thema gab beispielsweise C.H. Conrad, der langjährige Förderer der ECC-Mörtel, im Lehrgang Nr. 14487/80.127 der Technischen Akademie Esslingen, 1991.

Für ECC-Mörtel recht brauchbare Härter werden in EP 605 B1 beschrieben. Zu ihrer Herstellung wird zunächst ein Harzvorprodukt aus Polyethylenglycol mit einer mittleren Molmasse $M_r \approx 1000$ g/mol und überschüssigem Bisphenol A/F-Diglycidylethergemisch synthetisiert. Dieser Prozess erfordert die Anwesenheit eines geeigneten Lewissäure-Katalysators, hohe Temperaturen und lange Reaktionszeiten. Zudem muss das hygroskopische Polyethylenglycol vorher sorgfältig getrocknet werden, da sonst Nebenprodukte entstehen, was unerwünschterweise die Härterqualität beeinträchtigt. Das Harzvorprodukt ist somit ein Epoxid-terminiertes Polyethylenglycol in überschüssigem Epoxidharz. Es wird in einer zweiten Stufe mit einem Ueberschuss an Diaminen umgesetzt und mit Wasser auf 80 % F.K. verdünnt. Schliesslich wird ein Teil der primären Aminogruppen mit Acrylnitril in einer vinylogen Addition in sekundäre Aminogruppen überführt. Aus den Patentangaben kann geschlossen werden, dass ein derartiger Härter etwa folgende Zusammensetzung hat (Beispiel 1A/3C, 100 proz):

| | |
|---|---|
| ca. 45 % (ca. 14 mol-%) | Bis(Diamin-Diepoxid)-Polyethylenglycoladdukt, das als Emulgator wirkt. |
| ca. 35 % (ca. 32 mol-%) | Bis(Diamin)-Epoxidharzaddukt. |
| ca. 20 % (ca. 49 mol-%) | Bis(Acrylnitril)-Diaminaddukt <5 % freies Diamin |

Ein grosser Nachteil dieser Härter besteht darin, dass sie zwar in einer Verdünnung von 20 % F.K. übliche Mörtelzusätze wie z.B. Hochleistungsverflüssiger ohne zu koaleszieren durchaus noch aufzunehmen vermögen - jedoch nur bis zu einer Temperatur von ca. 35° C. Dies erschwert aber die wichtige Formulierung von Fliessmörteln

ungemein. Zudem ist es schwierig, wegen der heiklen ersten Stufe, diese Härter in einer konstanten Qualität herzustellen.

EP 387'418 A2 versucht, die schwierige Synthese eines polyethermodifizierten Harzvorproduktes zu vereinfachen, indem von aminterminierten Polyethylenglycolen (Jeffamine $^R$ ED, TEXACO) ausgegangen wird. Dieser Schritt ist jedoch nicht neu. Beispielsweise werden bereits in EP 109'173 B1 wasseremulgierbare Jeffamine $^R$ - Epoxidharzaddukte beschrieben. Ein solches Harzvorprodukt ist aber nur beschränkt lagerfähig, da die darin enthaltenen tertiären Aminogruppen eine langsame Gelierung durch Katalysierung von Veretherungsreaktionen bewirken. Das Vorprodukt wird in einer zweiten Stufe - völlig analog zu EP 605 - mit einem Ueberschuss an Diaminen zu Addukten umgesetzt. In der Mehrzahl der Beispiele wird ebenfalls Acrylnitril verwendet. Allerdings wird in diesem Fall - im Gegensatz zu EP 605 - nicht zuerst mit Wasser verdünnt und dann 2-cyanoethyliert. Vielmehr wird zunächst ein Diamin-Cyanoacrylataddukt in überschüssigem Diamin hergestellt. Dieses wird dann mit dem Harzvorprodukt umgesetzt und schliesslich mit Wasser auf 80 % F.K. verdünnt. Typische Zusammensetzungen sind etwa:

| | Beispiel 11 | | Beispiel 17 | |
|---|---|---|---|---|
| | [%] | [mol-%] | [%] | [mol-%] |
| Tetrakis (Diamin-Diepoxid) Jeffamineaddukt, das als Emulgator wirkt | ca. 49 | 5 | ca. 50,0 | 4,5 |
| Bis(Diamin)Harzaddukt | 16 | 10 | 2,5 | 1,0 |
| Acrylnitril-Diaminmonoaddukt | -- | -- | 31,0 | 49,0 |
| freies Diamin | 35 | 85 | 16,5 | 45,5 |

Interessant ist die Verwendung eines Bisphenol-A-Diglycidylethers mit einer Epoxidequivalentmasse von 163 g/eq (!). Erstaunlich hoch sind bei allen Acrylnitril-haltigen Härtern die angegebenen "Aminequivalente" (gemeint sind wohl die H-aktiv Equivalentmassen oder NH-Equivalentmassen [g/eq]). Zwar trifft es tatsächlich zu, dass derartige Härter bei 80 % F.K. eine recht niedrige Viskosität haben, was bei dem hohen Anteil an freien Diaminen und Acrylnitriladdukten nicht weiter verwunderlich ist. Die Mischviskosität einer 50 proz. Harz-Härterdispersion liegt aber meist viel zu hoch. Weiter können diese Härter nicht auf 20 F.K. verdünne werden, was ihrer allgemeinen Verwendung in ECC-Mörteln entgegensteht und sich auch bei der Reinigung der Verarbeitungswerkzeuge unangenehm bemerkbar macht.

Das Ziel der vorliegenden Erfindung war es daher, die erwähnten Nachteile der beschriebenen wasserverdünnbaren Härter zu umgehen Es galt u.a. folgende Anforderungen zu erfüllen

- einfache Herstellung der Härter ("Eintopfverfahren")
- keine hohen Prozesstemperaturen (<100° C).
- keine Verwendung von toxikologisch bedenklichen Rohstoffen wie Acrylnitril, Ethylenimin etc.
- keine Verwendung von organischen Lösungsmitteln
- die Härter sollen auch bei einer Verdünnung um 20 % F.K. bei Temperaturen bis 50° C über lange Zeit ohne Koaleszenz lagerbar sein.

Ueberraschenderweise zeigte es sich, dass die angestrebten Ziele durch die erfindungsgemässen Härtungsmittel gelöst werden können, welche mindestens einen Emulgator, mindestens einen Coemulgator und mindestens ein Bis(diamin)-diepoxidaddukt enthalten.

<u>BESCHREIBUNG DER ERFINDUNG</u>

Ein Gegenstand der vorliegenden Erfindung ist ein Härtungsmittel für wässrige Epoxidharzdispersionen, welches Aminogruppen enthält, das dadurch gekennzeichnet ist, dass es die folgenden Komponenten enthält:

10-80 Gew.-% mindestens eines Emulgators, der in seinem Molekül mindestens eine Polyalkylenpolyetherdiamingruppierung der Formel I

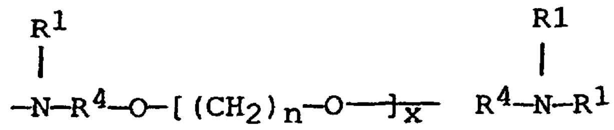 I

aufweist, in welcher die Reste

$R^1$ unabhängig voneinander für Wasserstoffatome oder geradkettige oder verzweigtkettige Alkylreste mit 1-6 Kohlenstoffatomen, die gegebenenfalls einen Phenylrest als Substituenten tragen, stehen,

die Reste

$R^4$ unabhängig voneinander für eine Alkylengruppierung mit 1-8 Kohlenstoffatomen stehen,
n eine ganze Zahl im Bereich von 1-5 und
x eine ganze Zahl im Bereich von 8-90 bedeutet,

wobei die Gruppierung der Formel I an eine Grundstruktur der Formel IV

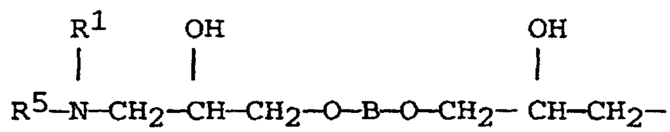 IV

gebunden ist, in welcher

$R^5$ einen Alkylrest mit 7-25 Kohlenstoffatomen oder einen aliphatischen Polyaminrest der Formel

$$R_6-Y-(NH-CH_2-CH_2)_z$$

darstellt, in welcher

$R_6$ einen Alkylrest mit 7-25 Kohlenstoffatomen bedeutet,
Y eine direkte Bindung oder die Gruppe

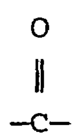

bedeutet und

z eine ganze Zahl im Bereich von 1-4 ist,
B ein Alkylenrest, ein in der Kette ein oder mehr Ethersauerstoffatome aufweisender Alkylenrest oder ein zweiwertiger cycloaliphatischer oder aromatischer oder araliphatischer Rest ist,

1-80 Gew.-% mindestens eines Coemulgators, der in seinem Molekül mindestens eine Polyalkylenpolyamingruppierung der Formel II

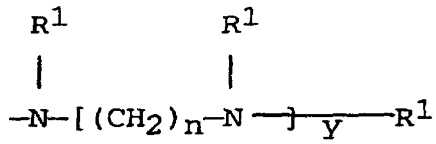

II

aufweist, in welcher die Reste

$R^1$ und das Symbol n unabhängig voneinander die gleiche Bedeutung aufweisen, wie in den Gruppierungen der Formel I und

y eine ganze Zahl im Bereich von 1-6 bedeutet,

wobei die Polyalkylenpolyamingruppierung der Formel II an eine Grundstruktur der Formel IV

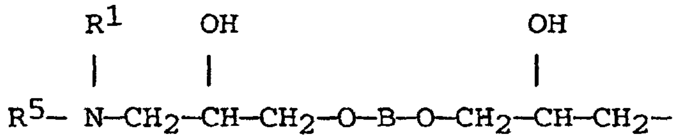

IV

gebunden ist, in welcher

$R^5$ einen Alkylrest mit 7-25 Kohlenstoffatomen oder einen aliphatischen Polyaminrest der Formel

$$R_6-Y-(NH-CH_2-CH_2)_z-$$

darstellt, in welcher

$R_6$ einen Alkylrest mit 7-25 Kohlenstoffatomen bedeutet,

Y eine direkte Bindung oder die Gruppe

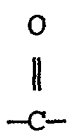

bedeutet und

z eine ganze Zahl im Bereich von 1-4 ist, und

B ein Alkylenrest, ein in der Kette ein oder mehr Ethersauerstoffatome aufweisender Alkylenrest oder ein zweiwertiger cycloaliphatischer oder aromatischer oder araliphatischer Rest ist, und

5-80 Gew.-% mindestens eines Bis(diamin)diepoxidadduktes enthält, das in seinem Molekül mindestens zwei Epoxid-diaminadduktgruppen der Formel III

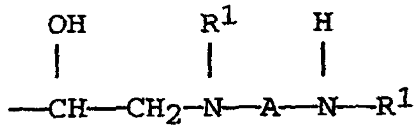

III

aufweist, in welcher

- $R^1$ die gleiche Bedeutung besitzt, wie in Formel I, und
- A ein Alkylenrest, ein Cycloalkylenrest, ein Polyalkylen-polyetherrest oder ein sowohl Alkyl als auch Cycloalkylgruppen und/oder aromatische Gruppen aufweisender zweiwertiger Rest ist,

wobei die zwei Gruppierungen der Formel III an eine zweiwertige Grundstruktur der Formel V

$$-CH_2-O-B-O-CH_2- \qquad V$$

gebunden sind, wobei in dieser Struktur

- B ein Alkylenrest, ein in der Kette ein oder mehr Ethersauerstoffatome aufweisender Alkylenrest oder ein zweiwertiger cycloaliphatischer oder aromatischer oder araliphatischer Rest ist,

und wobei die beiden Gruppierungen der Formel III, welche an diese zweiwertige Grundstruktur gebunden sind, miteinander gleich oder voneinander verschieden sind, und
wobei die Mischung bei Zugabe von Wasser spontan eine Mikroemulsion bildet.

Gegebenenfalls enthalten die erfindungsgemässen Härtungsmittel noch bis zu 80 Gew.-% eines Diamines oder eines Gemisches aus zwei oder mehr Diaminen, wobei Diamine mit zwei Aminogruppen bevorzugt sind.

In bevorzugten erfindungsgemässen Härtungsmitteln weist der restliche Teil des Moleküls, an den die Gruppierung der Formel I des Emulgators gebunden ist, beziehungsweise an den die Gruppierung der Formel II des Coemulgators gebunden ist, eine ähnliche Struktur auf, gegebenenfalls sogar eine identische Struktur.

Bevorzugte Härtungsmittel sind in den abhängigen Ansprüchen definiert.

Des weiteren betrifft die vorliegende Erfindung ein Verfahren zur Herstellung des erfindungsgemässen Härtungsmittels für wässrige Epoxidharzdispersionen, wobei die Komponenten Emulgator, Coemulgator und Bis(diamin)-diepoxidaddukt in den angegebenen Mengenverhältnissen miteinander vermischt oder die Mischung direkt nach einem Eintopfverfahren hergestellt wird.

Bevorzugte Ausführungsarten dieses Herstellungsverfahrens sind in den abhängigen Verfahrensansprüchen definiert.

Ein weiterer Gegenstand der vorliegenden Erfindung ist die Verwendung des erfindungsgemässen Härtungsmittels zur Härtung von polyfunktionellen wässrigen Epoxidharzdispersionen, wobei man das Härtungsmittel mit der wässrigen Epoxidharzdispersion vermischt.

Bevorzugte Verwendungen der erfindungsgemässen Härtungsmittel sind in den abhängigen Verwendungsansprüchen definiert.

Ein wesentliches Merkmal der erfindungsgemässen Härter besteht darin, dass sie in Gegenwart von Wasser spontan Mikroemulsionen bilden, die sowohl Oel in Wasser Mikroemulsionen (o/w-Mikroemulsion) als auch Wasser in Oel Mikroemulsionen, also w/o-Mikroemulsionen sein können.

Im Gegensatz zu wässrigen Lösungen von Aminen zeigen wasserenthaltende erfindungsgemässe Härtungsmittel den Tyndall-Effekt. Sie erscheinen bei seitlichem Einfall von Tageslicht bläulich und im Durchlicht gelblich.

Mikroemulsionen haben eine mittlere Teilchengrösse, die kleiner ist als ein Viertel der Wellenlänge des sichtbaren Lichts. Im Gegensatz zur klassischen Makroemulsion aus Wasser und Emulgator wird noch ein Coemulgator benötigt.

Wie bei Makroemulsionen, können diese Härter von einer w/o-Mikroemulsion beispielsweise durch Wasserzugabe in eine o/w-Mikroemulsion überführt werden. Dabei wird ein viskoelastischer Gelzustand durchlaufen, der auf die Anwesenheit einer flüssigkristallinen Phase zurückzuführen ist ("Wasserberg"). Im einfachsten Fall liegen dabei die Tensidmoleküle als oel- und wassergequollene lamellare oder zylindrische Micellen mit makroskopischen Ausdehnungen vor. Ein solches Medium ist anisotrop, vermag Licht zu polarisieren und zeigt das Phänomen der Doppelbrechung.

Im Gegensatz zu Systemen, die Makroemulsionen ausbilden, benötigen diese Härter beim Verdünnen keine Emulgierarbeit. Im Verdünnungsbereich der Mikroemulsion sind sie translucent, d.h. je nach Schichtdicke, klar bis opak und weisen keine Doppelbrechung auf.

Sie widerstehen den hohen Schergeschwindigkeiten eines Dissolvers und den enormen Beschleunigungen einer Laborzentrifuge. Auch die stark verdünnten Härter rahmen nicht auf, weil die Brownsche Bewegung ausreicht, um die Mikrotröpfchen in Verteilung zu halten.

Da Mikroemulsionen thermodynamisch stabil sind, ist die zeitliche Stabilität bei konstanten äusseren Bedingungen unbegrenzt. Manche Härter können allerdings durch starkes Erwärmen zur Koaleszenz gebracht werden. Beim Abkühlen gehen sie aber spontan wieder in eine Mikroemulsion über.

Eine Uebersicht der historischen Entwicklung gibt L.M. Price Ed., «Microemulsions», Academic Press New York 1977. Weitere Literaturhinweise finden sich in H. Stache, K. Kosswig Ed., «Tensid-Taschenbuch» , 3. Ausg., Carl Hanser-Verlag, München 1990, Kap.1. Wesentliche Beiträge zur Theorie der Ordnungsprozesse in flüssigkristallinen Phasen, Mikroemulsionen und anderen Vertretern der Kolloidchemie hat auch Pierre-Gilles de Gennes, Nobelpreisträger 1991, geleistet.

Wenn heute auch gute Vorstellungen über das Wesen von Mikroemulsionen existieren, so ist es oft trotzdem recht schwierig, derartige Produkte herzustellen. Wie erwähnt, sind die Teilchengrössen etwa 10 bis 100 mal kleiner als bei Makroemulsionen. Das bedeutet eine Oberflächenmehrung um den Faktor 100 bis 10'000. So erscheint es nicht erstaunlich, dass bei Makroemulsionen i.a. 1-2 % Emulgator, bei Mikroemulsionen aber bis zu 50 % einer geeigneten Mischung aus Emulgator und Coemulgator eingesetzt werden. Dieser hohe Tensidgehalt kann aber nur toleriert werden, wenn er Bestandteil der "Wirksubstanz" ist. Es können also keineswegs einfach handelsübliche Emulgatoren verwendet werden.

Erfindungsgemäss lässt sich das Problem so lösen, indem der Emulgator, der Coemulgator und ein wasserunlösliches Addukt wie folgt aus handelsüblichen Rohstoffen aufgebaut wird:

Modell 1 idealisiert

Emulgator

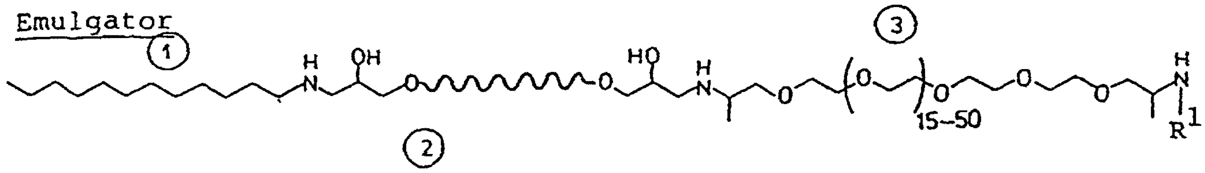

Coemulgator

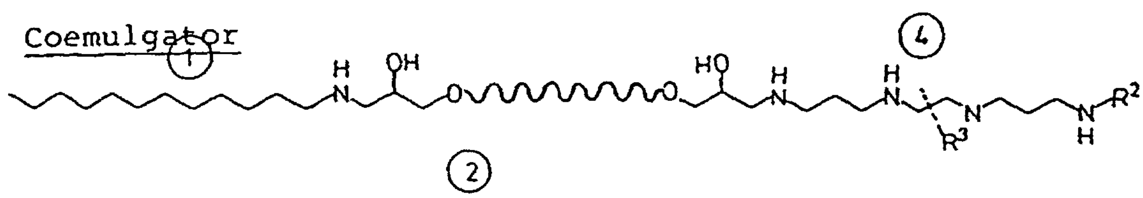

Bis(Diamin)addukt

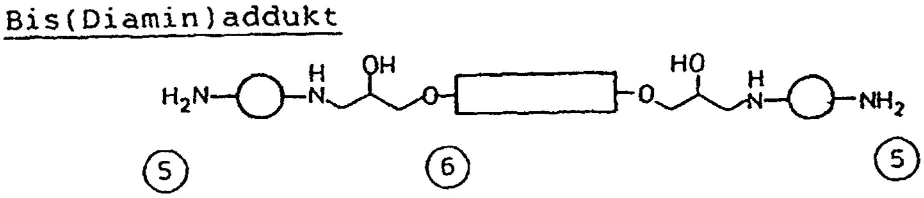

In dem Schema 1 haben die Symbole die folgenden Bedeutungen:

$R^1$ und $R^2$ sind H, Alkyl oder arylsubstituiertes Alkyl, beispielsweise Methyl, Ethyl, n-Propyl, Isopropyl, Butyl und Benzyl

① = Alkylamin, z.B. Fettamine
② = aliphatischer Diglycidylether
③ = Polyether-Diamin, z.B. Jeffamin ED 900, 2001, etc.
④ = Polyalkylenpolyamin, z.B. TETA (Triethylen = tetramin), TEPA (Tetraethylen-pentamine), $N_4$-Amin, etc.
⑤ = Cycloaliphatische Diamine, z.B. Vestamin-IPD oder alternativ mXDA, etc.
⑥ = Mischungen aus aliphatischen und aromatischen Diglycidylethern.

Aus der Tensidchemie ist bekannt, dass das Verschliessen der Endgruppe zu schaumarmen Emulgatoren führt (vergl. zB A.Pryce et al., "End blocked nonionic surfactants - a new approach", Kongressberichte, Welt-Tensid-Kongress, München 1984, S. 51).

Die endständige Alkylierung der erfindungsgemässen Emulgatoren und Coemulgatoren führt aber neben einer deutlichen Reduzierung der Schaumbildungsneigung zu weiteren Vorteilen gegenüber den nichtalkylierten Tensiden:

- deutliche Verbesserung der Glanzbildung der Filme
- starke Verbesserung der Filmhaftung
- bessere Verträglichkeit der Härter mit gewissen üblichen Mörtelzusätzen
- bessere Verarbeitbarkeit der ECC-Produkte.

Die Alkylierung kann mit den in der Organischen Chemie üblichen Methoden erfolgen. Allerdings wurden Dimethylsulfat, Diethylsulfat und andere klassische Verbindungen vermieden, weil sie hochtoxisch sind und Mörtelschädigende und korrosionsfördernde Ionen wie $SO_4^{2-}$, $Cl^-$, $Br^-$ etc. gebildet werden. Daher werden die erfindungsgemässen Emulgatoren und Coemulgatoren besser mit Aldehyden und Ameisensäure reduktiv alkyliert.

Diese Reaktionen sind in der Literatur als Leuckart-Wallach- oder Eschweiler-Clarke-Reaktion bekannt (vergl. Houben-Weyl XI/1, 648, Ullmann XIV, 639). Sie werden oft auch als reduktive Aminierung von Iminen umschrieben, da die Reaktion zB. mit Formaldehyd über das Imin verläuft, das durch ein Hydridion aus dem Formiatanion reduziert wird. Die Reduktion kann aber auch durch katalytische Hydrierung erfolgen. Eine weitere Möglichkeit bieten toxikologisch weniger bedenkliche Alkylierungsreagenzien wie zB Trimethylphosphat oder Dimethylmethylphosphonat, deren Ionen auch nicht korrosionsfördernd auf Armierungseisen wirken.

Allerdings können sie sich in manchen ECC-Produkten störend auf die Applikationseigenschaften auswirken. 2-Hydroxyalkylierungen mit niedrig-molekularen Epoxidverbindungen bewähren sich weniger.

Bei der Herstellung der erfindungsgemässen Emulgatoren und Coemulgatoren muss natürlich so vorgegangen werden, dass die gewünschten Produkte in genügend hoher Ausbeute gebildet werden, da die hergestellten Härter sonst nicht die zu erreichenden Vorteile aufweisen würden. Obwohl hauptsächlich difunk tionelle Moleküle eingesetzt werden, lässt sich das überraschenderweise tatsächlich erreichen (vergl. Beispiel 1). Bei der Herstellung des Emulgators lässt sich dies vereinfacht etwa folgendermassen verstehen: das kleinere und sterisch weniger behinderte Alkylamin wird schneller als das grosse Polyether-Diamin mit dem rasch zugegebenen aliphathischen Epoxidharz reagieren. Die Alkylamin-Moleküle sowie die zunächst gebildeten Alkylamin-Epoxidharz-Monoadduktmoleküle ordnen sich zudem aufgrund ihrer Struktur vermutlich zu Micellen oder Vesikeln an, obwohl die Reaktionsmasse noch kein Wasser enthält. Die Alkylreste werden sich ja leichter mit ihresgleichen assoziieren als mit den Polyethersegmenten. Nun ist bekannt, dass die Diffusion von Edukten, Zwischenprodukten und Produkten in membran-mimetischen Systemen oft stark verändert ist. Dies kann zu Matrix-Effekten oder schnellen Trennungen von Produkten führen, wodurch unerwünschte Folgereaktionen unterdrückt werden.

Dies würde anschaulich erklären, dass die grossen Polyetherdiaminemoleküle schliesslich grösstenteils nur auf einer Seite mit dem Alkylamin-Epoxidharz-Monoaddukt reagieren, so dass der gewünschte Emulgator in genügender Ausbeute gebildet wird (vergl. dazu J.H. Fendler, "Membran Mimetic Chemistry", John Wiley & Sons, New York 1982).

Der in Beispiel 1 vorgestellte Härter weist in hohem Mass die angestrebten Vorteile auf. Da sich der Härter aus drei Bisaddukten zusammensetzt, ist seine Viskosität bei 20° C sehr hoch. Er lässt sich nicht als w/o-Mikroemulsion (z.B. 80 proz.) handhaben und wird daher unmittelbar nach der Herstellung auf 50 % verdünnt.

Wegen seines niederen Gehalts an freien Diaminen (theoretisch = 0) und hervorragendem Emulgiervermögen gleicht er in Geruch und Handhabung eher einem basischen Reinigungsmittel als einem Aminhärter. Hervorzuheben sind auch die guten lacktechnischen Eigenschaften und die erstaunlich schnelle Durchhärtung der Filme.

Wenn man aber die erfindungsgemässen Härter nicht mit aliphatischen Diglycidylethern sondern mit billigen handelsüblichen Epoxidharzen (BPADGE) nach Modell 1 herstellen will, so ergeben sich eine ganze Reihe von Schwierigkeiten. Die wichtigsten:

- es besteht die Gefahr, dass sich keine Mikroemulsion bilden kann, weil die mit den starreren Emulgatormolekülen abgesättigte Grenzfläche möglicherweise nicht mehr imstande ist, die dazu notwendige starke sphärische Krümmung einzunehmen.
- unüberwindliche Viskositätsprobleme
- unbefriedigende Filmbildung (Wassereinschluss).

Um diese Schwierigkeiten zu überwinden, können einem solchen Ansatz am Ende der Herstellung noch 1 mol Diamin pro mol Bisaddukt zugemischt werden. Die Masse lässt sich dann gut mit Wasser zu einem 80 proz. Härter verdünnen. Bei genügender Verdünnung bildet ein solcher Härter dann die gewünschte o/w-Mikroemulsion mit den angestrebten Vorteilen aus.

Man kann sich vorstellen, dass geeignete Diamine (obwohl wasserlöslich) aufgrund von sogenannten hydrophoben Wechselwirkungen eine Art Einschlusskomplex mit den zwei Hydroxylgruppen der Bisadduktmoleküle bilden (vergl. "Emulgatoren für die Lebensmittelchemie", G. Schuster, Ed., Springer, Berlin 1985, S. 40; F. Diederich, Chemie in unserer Zeit 4, 105 (1983) ). Dadurch werden die starken intermolekularen Wasserstoffbrückenbindungen zwischen den Emulgatormolekülen aufgehoben und die Beweglichkeit und das Spreitungsvermögen der Tensidmoleküle erhöht.

Die erfindungsgemässen Härter können also auch wie folgt aus handelsüblichen Rohstoffen aufgebaut werden:

Modell 2 idealisiert

Emulgator

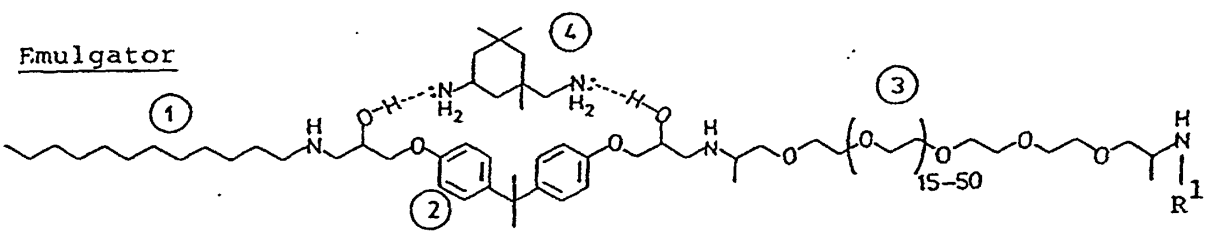

Coemulgator

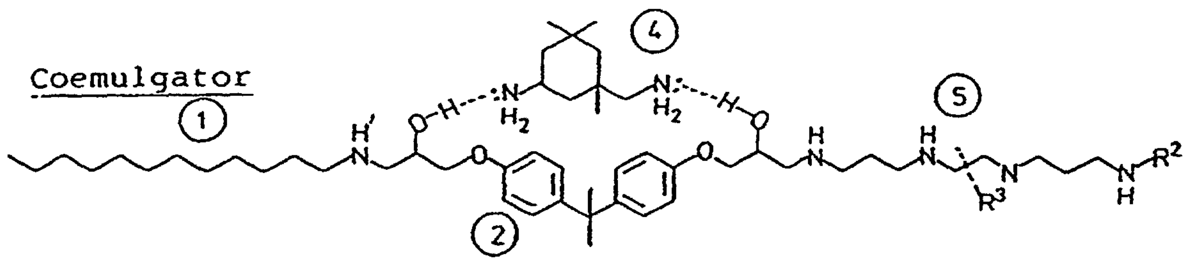

Bis(Diamin)addukt

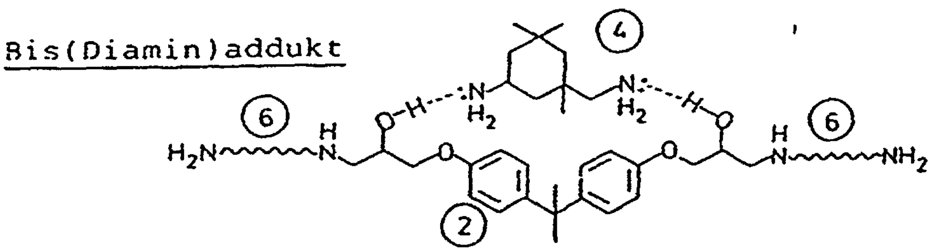

In diesem Schema haben die Symbole die folgenden Bedeutungen:

$R^1$ und $R^2$ = Wasserstoff, Alkyl oder arylsubstituiertes Alkyl, beispielsweise Methyl, Ethyl, n-Propyl, Isopropyl, Butyl und Benzyl

① = Alkylamin, z.B. Fettamin

② = Bisphenol-A-Diglycidylether (BPADGE)

③ = Polyether-Diamin, z.B. Jeffamin ED 2001
④ = Diamine, z.B. Vestamin-IPD (in Modell 2 dargestellt), mXDA, Jeffamin D-230
⑤ = Polyalkylenpolyimine, z.B. $N_4$-Amin (in Modell 2 dargestellt), TETA, TEPA
⑥ = Diamin, z.B. MPMD (2-Methyl-pentamethylen-diamin), TMD (Trimethylhexamethylen-diamin), Jeffamin D-230, Vestamin-IPD, mXDA.

Beispiel 1

160,00 g (ca. 80 mmol) Jeffamin ED 2001 (TEXACO) werden in einer geschlossenen Apparatur mit Eintropftrichter und Rührer aufgeschmolzen und dann auf 80°C aufgeheizt. Dann werden 8,48 g (80 mmol) Benzaldehyd unter gutem Rühren innert 5-10 Min. zugetropft.

Nach weiteren 10 Min. werden rasch 15,92 g (ca. 80 mmol) Armeen CD (Akzo) und anschliessend 30 g (ca. 80 mmol) Epoxidharz DER 73 (DOW) zugegeben. Nach 60 Min. Rühren bei 80° C gibt man 41,76 g (240 mmol) $N_4$-Amin (BASF) rasch zu und kühlt dann vorteilhaft auf ca. 50° C. Darauf werden 19,46 g (240 mmol) 37 proz wässrige Formaldehydlösung unter starkem Rühren langsam unter Kühlen zugetropft, nach weiteren 10 Min. 47,76 g (240 mmol) Armeen CD zugegeben und bei ca. 70° C möglichst rasch 90 g (ca. 240 mmol) DER 736 kontinuierlich zugetropft. Wenn die Reaktion anspringt muss zunächst gekühlt und dann wieder geheizt werden. Nach weiteren 60 Min. bei 80° C gibt man 150,78 g (887 mmol) IPD (HUELS) und 120,62 g (887 mmol) m-Xylylendiamin (Mitsubishi Gas) zu wobei die Temperatur auf ca. 65° C fällt. Dann werden nacheinander je 166,30 g (ca. 443 mmol) DER 736 und Araldit GY 250 (CIBA-GEIGY) zugetropft. Bei der Zugabe muss gekühlt werden. Die Reaktion zeigt eine gewisse Latenz. Anschliessend wird vorsichtig auf 80° C geheizt und 60 Min.weitergerührt. Dann gibt man 19,00 g (351 mmol) 85 proz. wässrige Ameisensäure innert 15 Min. zu und rührt weitere 105 Min. bei 80° C. Schliesslich wird mit 979,4 g Leitungswasser verdünnt. Zusammen mit dem gebildeten Wasser und abzüglich $CO_2$ ergeben sich 2 kg 50 proz. Härter 1. Vorsicht: Beim Umgang mit Fettaminen muss vor Augenspritzern gewarnt werden!

Beispiel 2

160,00 g (ca. 80 mmol) Jeffamin ED 2001 (TEXACO) werden in einer geschlossenen Apparatur mit Eintropftrichter und Rührer aufgeschmolzen, 15,92 g (ca. 80 mmol) Genamin CC-100 D (HOECHST) zugegeben und auf 80° C aufgeheizt. Dann werden 30 g (ca. 80 mmol) Araldit GY 250 (CIBA-GEIGY) rasch zugegeben und nach 120 Min. Rühren bei 80° C werden 8,48 g (80 mmol) Benzaldehyd innert 5-10 Min. zugetropft und 10 Min. weitergerührt.

Dann gibt man 41,76 g (240 mmol) $N_4$-Amin (BASF) rasch zu und kühlt dann vorteilhaft auf ca. 50° C. Darauf werden 19,46 g (240 mmol) 37 proz. wässrige Formaldehydlösung unter starkem Rühren langsam unter Kühlen zugetropft, nach weiteren 10 Min. werden 47,76 g (240 mmol) Genamin CC-100 D (HOECHST) zugegeben und bei ca. 70° C möglichst rasch 90 g (ca. 240 mmol) GY 250 kontinuierlich zugetropft. Wenn die Reaktion anspringt muss zunächst gekühlt und dann wieder geheizt werden. Nach 60 Min. Rühren bei 80° C gibt man 19,00 g (351 mmol) 85 proz. wässrige Ameisensäure innert 15 Min. zu und rührt weitere 105 Min. bei 80° C. Nach Zugabe von 257,40 g (ca. 1072 mmol) Jeffamin D 230 (TEXACO) tropft man langsam 201,10 g (536 mmol) GY 250 zu. Bei der Zugabe muss gekühlt werden. Die Reaktion zeigt eine gewisse Latenz. Anschliessend wird vorsichtig auf 80° C geheizt und 60 Min. weitergerührt. Dann gibt man nacheinander 145,60g (856 mmol) IPD (HUELS) und 229,4 g Leitungswasser zu. Zusammen mit dem gebildeten Wasser und abzüglich $CO_2$ ergeben sich 1,25 kg 80 proz. Härter 2.

Beispiel 3

Es wird analog zu Beispiel 2 verfahren, wobei aber am Schluss kein IPD, sondern 116,40 g (856 mmol) m-Xylylendiamin zugegeben wird. Dies wird auch bei der Verdünnung des Härters 3 auf 80 % F.K. berücksichtigt.

Beispiel 4

Es wird analog zu Beispiel 2 verfahren, wobei aber am Schluss kein IPD, sondern 205,40 g (ca. 856 mmol) Jeffamin D-230 (TEXACO) zugegeben wird. Dies wird auch bei der Verdünnung des Härters 4 auf 80 % F.K. berücksichtigt.

Beispiel 5

Vergleich der Härter 1-4.
55,2 g Bisphenol-A/F-Epoxidharz zB Eurepox 720 (Schering) 3,6 g Kresylglycidylether =B RV 1805 (EMS) und 1,2 g eines nichtionischen Emulgators aus Nonylphenol + ca. 30 mol Ethylenoxid (HLB=17) zB Antarox CO 880 (GAF) wurden mit 40 g Leitungswasser nach den üblichen Regeln der Kunst zu einer 60 proz. Epoxidharzdispersion emulgiert, im folgenden Komp. A genannt. Die Epoxidequivalenzmasse beträgt EEM = 179 g/eq (100 proz.).
Alle Härter wurden in der nachfolgenden Prüfung auf 50 % F.K. verdünnt und als Komp. B bezeichnet. Die H-aktiv-Equivalenzmasse oder NH-Eqinivalenzmasse NH-EM [g/eq] wird aus der Stöchiometrie berechnet.

Komp. A und Komp. 5 wurden mit einem Mischpropeller 30 sec lang bei ca. 200 UPM gemischt und sofort mit Hilfe eines Rakels von 76 µm bzw 500 µm Spaltbreite auf Glas aufgezogen und bei Laborbedingungen gehärtet.

Die Gelierungszeiten wurden mit einem Beck-Koller 3-speed Drying Recorder (The Mickle Laboratory Engineering Co., Mill Works, Gomshall Guildford, Surrey GUS 9LJ, England) registriert.

Die Viskositäten wurden mit einem Kegel-Platten-Viskosimeter (Rheomat 115, CP8 bzw. CP5, Stufe 5; neu bei Mettler, Greifenseestr. 25, CH-8604 Volketswil) bestimmt.

Die Buchholzhärte wurde mit einem PIG-Gerät gemessen (Byk-Labotron AG, Lausitzerstrasse 8, D-8192 Geretsried 2).

Die Wasserzahl [ml] wurde nach H.L. Greenwald et al., Anal.Chem. 28 , 1693 (1956) bestimmt.

| Härter | 1 | 2 | 3 | 4 |
|---|---|---|---|---|
| Konzentration | 50 | 80 | 80 | 80 |
| Aspekt | translucent | klar | klar | klar |
| NH-EM (100 proz.) [g/eq] | 148 | 124 | 120 | 131 |
| Aminzahl [mgKOH/g] | 110-113 | 210-222 | 205-215 | 220-235 |
| Wasserzahl [ml], korr. | 17,4 | 13,1 | | |
| Viskosität [mPas], 20°C ca. | 33'000 | 54'000 | 108'000 | 47'000 |
| Lagerversuch, 50°C (2 Wochen) | | | | |
| - normale Konzentration | Gelierung | i.O. | i.O. | i.O. |
| - 20 % F.K. | i.O. | i.O. | i.O. | i.O. |
| **A+B** | | | | |
| Viskosität [mPas], 20°C, nach 10 Min, ca. | 1'200 | 1'300 | 710 | 250 |
| Film 1) 76 µm-Aufzug Aspekt | i.O. | i.O. | i.O. | i.O. |
| Beck-Koller soft gel [std] ca. | <0,5 | 3,7 | 5,0 | 7,0 |
| hard gel [std] ca. | 4,2 | 7,1 | 10,5 | 14,0 |
| Ritzspur [std] ca. | 10,2 | >15,0 | 21,0 | >22,0 |
| 2) 500 µm-Aufzug Aspekt | i.O., Luftbl. | i.O. | i.O., bläulich | i.O. |
| Buchholzhärte nach 3 Tagen | 71 | 83 | 77 | 63 |
| nach 14 Tagen | 100 | 100 | 100 | 95 |
| Haftung auf Glas nach 3 Tagen | i.O. | i.O. | i.O. | i.O. |

Beispiel 6

Mit der Expodiharzdispersion aus Beispiel 5, dem geeignet verdünnten Härter 2 und aus Zement und Sand wurde ein ECC-Mörtel der nachfolgend genannten Zusammensetzung 3 Min. in einem Zwangsmischer der Firma COLLOMIX GmbH, Horchstr. 2, D-8074 Gaimersheim, Deutschland, gemischt. Dann wurden aus der Mischung Prismen 40x40x160 mm gemäss DIN 1164, Teil 7, hergestellt, und diese wurden nach 28 Tagen Lagerung bei 23° C und 50% r. LF. geprüft.

| ECC-Mörtel | % |
|---|---|
| emulgierbares EP-Harz (Bsp.5, 100 proz.) | 3,01 |
| Härter 2 (100 proz.) | 2,09 |
| Portlandzement | 22,47 |
| Sand | 60,76 |
| Leitungswasser | 11,67 |
| | 100,00 |

K/Z-Faktor = 0,23
W/Z-Faktor = 0,52

- Druckfestigkeit 51 N/mm$^2$
  Biegezugfestigkeit 10,5 N/mm$^2$
  Haftzugfestigkeit 3,7 N/mm$^2$,Bruch im Untergrund
- Hohe Frost-Tausalz-Beständigkeit nach SN 640 461 (schweizerische Normenvereinigung)
- Diffusionskoeffizient $\mu_{CO2}$ >100'000
  $\mu_{H20}$ ca. 300
- Wasseraufnahmekoeffizient A gemäss DIN 52617
  0,03 kg/m$^2$ h $^{0,5}$
- Verseifungsbeständigkeit nach 28 Tagen Lagerung in ges.CaOH-Lösung bei 60° C :

  gleichbleibende Druckfestigkeit
  abnehmende Biegezugfestigkeit (-16 %).
  Steigerung der Haftzugfestigkeit (+10%, Bruch im Untergrund)

Die Ausgangsprodukte, die in den Beispielen 1 bis 5 verwendet wurden und die unter Handelsnamen verkauften Produkte werden in der nachfolgenden Tabelle näher erläutert, und die entsprechenden Erläuterungen betreffen auch die Handelsprodukte, welche Komponenten der Emulgatoren, Coemulgatoren, beziehungsweise Bis(diamin)-addukte darstellen, welche in den Formelschemen des Modell 1, sowie des Modell 2 angeführt sind.

In der nachfolgenden Tabelle bedeutet die Bezeichnung PEG Polyethylenglycol und die Bezeichnung PPG Polypropylenglycol.

In der ersten Spalte der Tabelle sind die Rohstoffe angeführt, die zur Herstellung der Produkte der angegebenen Handelsnamen eingesetzt werden (siehe die zweite Spalte der Tabelle).

In der letzten Spalte der Tabelle werden die Nummer aus Chemical Abstracts genannt, unter denen nähere Erläuterungen betreffend die angegebenen Produkte gefunden werden können.

| Rohstoff | Handelsname | Hersteller | Mr ([g/mol] aprox. | EM [g/eg] aprox. | CAS-Nr. |
|---|---|---|---|---|---|
| Bis(aminopropyl)-PEG | Jeffamin ED 2001 | TEXACO | 2000 | 500 | 65605-36-9 |
| Bis(aminopropyl)-PPG | Jeffamin D-230 | TEXACO | 240 | 60 | 9046-10-0 |
| Cocoamin, dest. | Armeen CD | Akzo | 200 | 100 | 61788-46-3 |
| Cocoamin, dest. | Genamin CC-100D | HOECHST | 200 | 100 | 61788-46-3 |
| N,N'-Bis-(2-Aminopropyl)-ethylendiamin | $N_4$-Amin | BASF | 174 | 29 | 10563-26-5 |
| 3-Aminomethyl-3,5,5-trimethylcyclohexyl-amin | Vestamin-IPD | HUELS | 170 | 42,5 | 2855-13-2 |
| m-Xylylendiamin | mXDA | Mitsubishi Gas | 136 | 34 | 1477-55-0 |
| Propylenglycol-diglycidylether | DER 736 | DOW | 374 | 187 | 8072-62-2 |
| Bisphenol-A-diglycid-ether | Araldit GY250 | CIBA-GEIGY | 376 | 188 | 25085-99-8 |
| Bisphenol-A/F-diglycidylether | Eurepox 720 | Schering | 374 | 187 | |
| Kresylglycidylether | RV 1805 | EMS | 180 | 180 | 26447-14-3 |
| Benzaldehyd | | Bayer | 106 | | 100-52-7 |
| Formaldehyd, 37% | | Degussa | 30 | | 50-00-0 |
| Ameisensäure | | Degussa | 46 | | 64-18-6 |
| Nonyl-phenoxy-poly-ethoxy-ethanol | Antarox CO 880 | GAF | 1540 | | 9016-45-9 |

**Patentansprüche**

1. Härtungsmittel für wässrige Epoxidharzdispersionen, welches Aminogruppen enthält, **dadurch gekennzeichnet, dass** es die folgenden Komponenten enthält:

10-80 Gew.-% mindestens eines Emulgators, der in seinem Molekül mindestens eine Polyalkylenpolyetherdiamingruppierung der Formel I

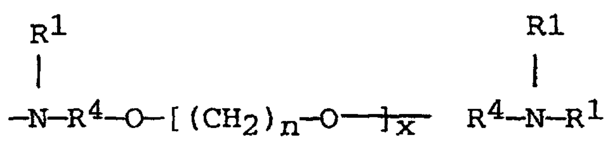 I

aufweist, in welcher die Reste

$R^1$ unabhängig voneinander für Wasserstoffatome oder geradkettige oder verzweigtkettige Alkylreste mit 1-6 Kohlenstoffatomen, die gegebenenfalls einen Phenylrest als Substituenten tragen, stehen,

die Reste

$R^4$ unabhängig voneinander für eine Alkylengruppierung mit 1-8 Kohlenstoffatomen stehen,
n eine ganze Zahl im Bereich von 1-5 und
x eine ganze Zahl im Bereich von 8-90 bedeutet,

wobei die Gruppierung der Formel I an eine Grundstruktur der Formel IV

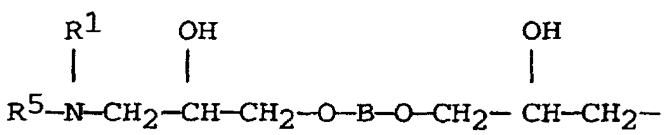 IV

gebunden ist, in welcher

$R^5$ einen Alkylrest mit 7-25 Kohlenstoffatomen oder einen aliphatischen Polyaminrest der Formel

$$R_6{-}Y{-}(NH{-}CH_2{-}CH_2)_z$$

darstellt, in welcher

$R_6$ einen Alkylrest mit 7-25 Kohlenstoffatomen bedeutet,
Y eine direkte Bindung oder die Gruppe

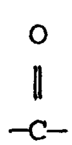

bedeutet und

z eine ganze Zahl im Bereich von 1-4 ist,
B ein Alkylenrest, ein in der Kette ein oder mehr Ethersauerstoffatome aufweisender Alkylenrest oder ein zweiwertiger cycloaliphatischer oder aromatischer oder araliphatischer Rest ist,

1-80 Gew.-% mindestens eines Coemulgators, der in seinem Molekül mindestens eine Polyalkylenpolyamingruppierung der Formel II

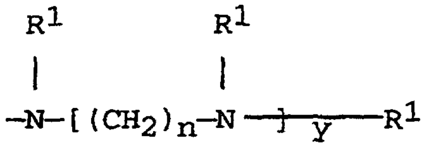 II

aufweist, in welcher die Reste

$R^1$ und das Symbol n unabhängig voneinander die gleiche Bedeutung aufweisen, wie in den Gruppierungen der Formel I und
y eine ganze Zahl im Bereich von 1-6 bedeutet,

wobei die Polyalkylenpolyamingruppierung der Formel II an eine Grundstruktur der Formel IV

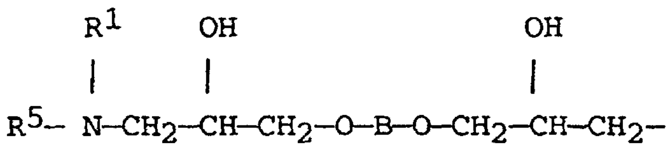 IV

gebunden ist, in welcher

$R^5$ einen Alkylrest mit 7-25 Kohlenstoffatomen oder einen aliphatischen Polyaminrest der Formel

$$R_6-Y-(-NH-CH_2-CH_2)_z-$$

darstellt, in welcher

$R_6$ einen Alkylrest mit 7-25 Kohlenstoffatomen bedeutet,
Y eine direkte Bindung oder die Gruppe

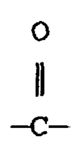

bedeutet und

z eine ganze Zahl im Bereich von 1-4 ist, und
B ein Alkylenrest, ein in der Kette ein oder mehr Ethersauerstoffatome aufweisender Alkylenrest oder ein zweiwertiger cycloaliphatischer oder aromatischer oder araliphatischer Rest ist, und

5-80 Gew.-% mindestens eines Bis(diamin)diepoxidadduktes enthält, das in seinem Molekül mindestens zwei Epoxid-diaminadduktgruppen der Formel III

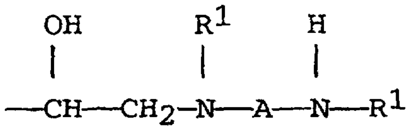

III

aufweist, in welcher

- $R^1$ die gleiche Bedeutung besitzt, wie in Formel I, und
- A ein Alkylenrest, ein Cycloalkylenrest, ein Polyalkylen-polyetherrest oder ein sowohl Alkyl als auch Cycloalkylgruppen und/oder aromatische Gruppen aufweisender zweiwertiger Rest ist,

wobei die zwei Gruppierungen der Formel III an eine zweiwertige Grundstruktur der Formel V

$$-CH_2-O-B-O-CH_2- \quad \text{V}$$

gebunden sind, wobei in dieser Struktur

- B ein Alkylenrest, ein in der Kette ein oder mehr Ethersauerstoffatome aufweisender Alkylenrest oder ein zweiwertiger cycloaliphatischer oder aromatischer oder araliphatischer Rest ist,

und wobei die beiden Gruppierungen der Formel III, welche an diese zweiwertige Grundstruktur gebunden sind, miteinander gleich oder voneinander verschieden sind, und
wobei die Mischung bei Zugabe von Wasser spontan eine Mikroemulsion bildet.

**2.** Härtungsmittel gemäss Anspruch 1, **dadurch gekennzeichnet, dass** die Grundstruktur der Formel IV im Emulgator und Coemulgator identisch ist.

**3.** Härtungsmittel gemäss Anspruch 1 oder 2, **dadurch gekennzeichnet, dass** es als weitere Komponente noch ein Diamin oder ein Gemisch aus zwei oder mehr Diaminen enthält, und wobei das Härtungsmittel die folgende Zusammensetzung aufweist:

| | |
|---|---|
| 10-80 Gew.-% | mindestens eines Emulgators |
| 1-80 Gew.-% | mindestens eines Coemulgators |
| 5-80 Gew.-% | des mindestens einen Bis(diamin)diepoxidadduktes und |
| 1-80 Gew.-% | des Diamins oder Gemisches aus zwei oder mehr Diaminen. |

**4.** Härtungsmittel gemäss Anspruch 3, **dadurch gekennzeichnet, dass** das Diamin ein zwei primäre Aminogruppen aufweisendes Diamin der Formel VI

$$H_2N-B-NH_2 \quad \text{VI}$$

ist, wobei in dieser Formel

- B ein Alkylenrest, ein in der Kette ein oder mehr Ethersauerstoffatome aufweisender Alkylenrest oder ein zweiwertiger cycloaliphatischer oder aromatischer oder sowohl Alkyl als auch Cycloalkyl und/oder aromatische Gruppen aufweisender Rest ist.

**5.** Härtungsmittel gemäss einem der Ansprüche 1-4, **dadurch gekennzeichnet, dass** es als weitere Komponente Wasser enthält, und dass es als nichtionische Mikroemulsion vorliegt, vorzugsweise als Oel in Wasser Mikroemulsion.

**6.** Härtungsmittel gemäss einem der Ansprüche 1 bis 5, **dadurch gekennzeichnet, dass** die Polyalkylenpolyamingruppierung der Formel II die folgende Gruppierung ist:

$$-NH-CH_2-CH_2-CH_2-NH-CH_2-CH_2-NH-CH_2-CH_2-CH_2-NHR^1$$

worin $R^1$ die Bedeutung Methyl, Ethyl, n-Propyl, Isopropyl, Butyl und Benzyl hat.

**7.** Verfahren zur Herstellung des Härtungsmittels gemäss einem der Ansprüche 1-6, **dadurch gekennzeichnet, dass** man

10-80 Gew.-% mindestens eines Emulgators,
1-80 Gew.-% mindestens eines Coemulgators,
5-80 Gew.-% mindestens eines Bis(diamin)-

diepoxidadduktes miteinander vermischt oder die Mischung nach einem Eintopfverfahren herstellt, bei dem man nacheinander erst einen Emulgator, dann einen Coemulgator und schliesslich ein Bis(diamin)diepoxidaddukt erzeugt, wobei
im Emulgator die Polyalkylenpolyetherdiamingruppierung der Formel I

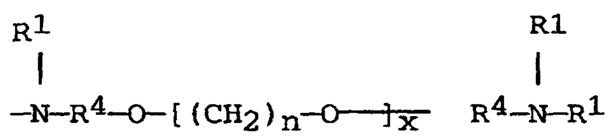 I

an eine Grundstruktur der Formel IV

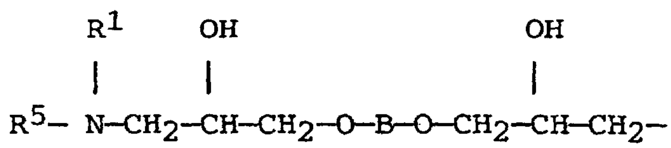 IV

gebunden ist, wobei in der Polyalkylenpolyetherdiamingruppierung der Formel I die Reste $R^1$, $R^4$, n und x die gleiche Bedeutung aufweisen, wie in Anspruch 1, und
n vorzugsweise 2 oder 3 ist, und in der Grundstruktur IV

$R^5$ einen Alkylrest mit 7-25 Kohlenstoffatomen oder einen aliphatischen Polyaminrest der Formel

$$R_6-Y-(NH-CH_2-CH_2)_z-$$

darstellt, in welcher

$R_6$ einen Alkylrest mit 7-25 Kohlenstoffatomen bedeutet,
Y eine direkte Bindung oder die Gruppe

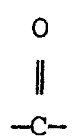

bedeutet und

- z eine ganze Zahl im Bereich von 1-4 ist,
- B ein Alkylenrest, ein in der Kette ein oder mehr Ethersauerstoffatome aufweisender Alkylenrest oder ein zweiwertiger cycloaliphatischer oder aromatischer oder araliphatischer Rest ist,

im Coemulgator eine Polyalkylenpolyamingruppierung der Formel II

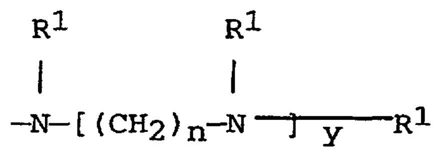

II

an eine Grundstruktur der Formel IV

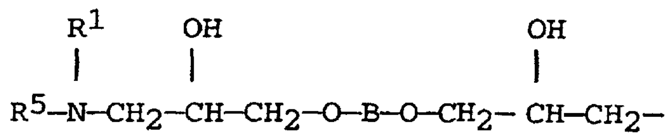

IV

gebunden ist,
wobei in der Polyalkylenpolyamingruppierung der Formel II, $R^1$, n und y die gleiche Bedeutung aufweisen, wie in Anspruch 1, und in der Grundstruktur der Formel IV

$R^5$ einen Alkylrest mit 7-25 Kohlenstoffatomen oder einen aliphatischen Polyaminrest der Formel

$$R_6-Y-(NH-CH_2-CH_2)_z-$$

darstellt, in welcher

- $R_6$ einen Alkylrest mit 7-25 Kohlenstoffatomen bedeutet,
- Y eine direkte Bindung oder die Gruppe

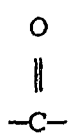

bedeutet und

- z eine ganze Zahl im Bereich von 1-4 ist,
- B ein Alkylenrest, ein in der Kette ein oder mehr Ethersauerstoffatome aufweisender Alkylenrest oder ein zweiwertiger cycloaliphatischer oder aromatischer oder araliphatischer Rest ist,

und wobei das Bis(diamin)diepoxidaddukt in seinem Molekül zwei Epoxid-diaminadduktgruppen der Formel III

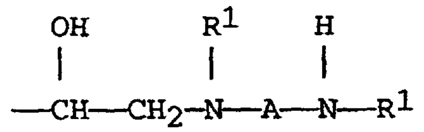

III

gebunden an eine zweiwertige Grundstruktur der Formel V

$$-CH_2-O-B-O-CH_2- \qquad V$$

aufweist, wobei in den Epoxid-diaminadduktgruppen der Formel III die Gruppen

$R^1$ und A die gleiche Bedeutung aufweisen, wie in Anspruch 1 und in der zweiwertigen Grundstruktur der Formel V

B ein Alkylenrest, ein in der Kette ein oder mehr Ethersauerstoffatome aufweisender Alkylenrest oder ein zweiwertiger cycloaliphatischer oder aromatischer oder araliphatischer Rest ist, und

wobei die beiden Gruppierungen der Formel III, welche an diese zweiwertige Grundstruktur gebunden sind, miteinander gleich oder voneinander verschieden sind.

**8.** Verfahren gemäss Anspruch 7, **dadurch gekennzeichnet, dass** nachfolgend zusätzlich 1-80 Gew.-% eines Diamins zugesetzt werden.

**9.** Verfahren gemäss Anspruch 7 oder 8, **dadurch gekennzeichnet, dass** zusätzlich Wasser unter Ausbildung einer Mikroemulsion beigegeben wird.

**10.** Verfahren gemäss einem der Ansprüche 7 bis 9, **dadurch gekennzeichnet, dass** man den Emulgator herstellt, indem man ein Alkylmonoamin und/oder Alkylpolyamin der Formel VII

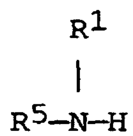

VII

mit einem Diepoxid der Formel VIII

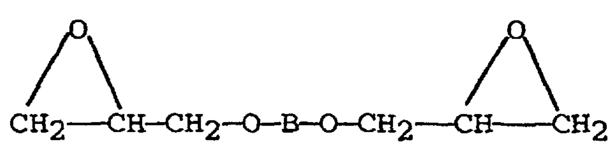

VIII

und einem Polyalkylenpolyetherdiamin der Formel IX

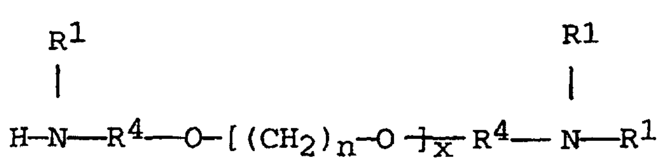

IX

umsetzt,

den Coemulgator indem man ein Alkylmonoamin und/oder Alkylpolyamin der Formel VII

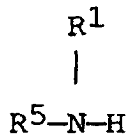

VII

mit einer Diepoxidverbindung der Formel VIII

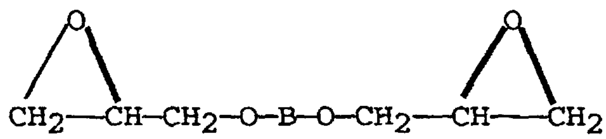

VIII

und einem Polyalkylenpolyamin der Formel X

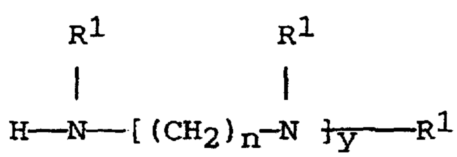

X

umsetzt, und

das Bis(diamin)diepoxidaddukt indem man ein oder mehrere Diamine der Formel XI

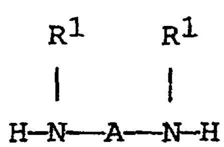

XI

mit einem Diepoxid der Formel VIII

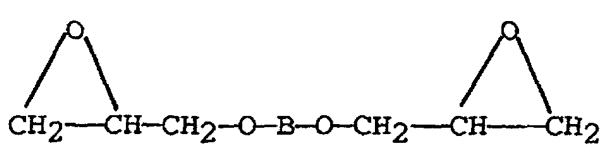

VIII

umsetzt.

**11.** Verfahren nach einem der Patentansprüche 7 bis 10, **dadurch gekennzeichnet, dass** man das Härtungsmittel nach einem Eintopfverfahren herstellt.

**12.** Verfahren nach einem der Patentansprüche 7 bis 11, **dadurch gekennzeichnet, dass** die Diamin- oder Polyaminsubstituenten des Emulgators und des Coemulgators, die sich vorzugsweise aus Polyaminen der Formel IX und

X ableiten,

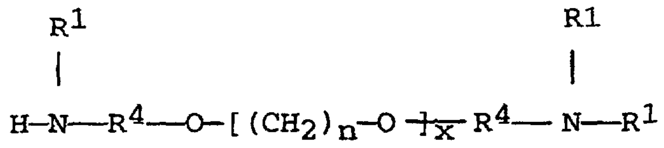 IX

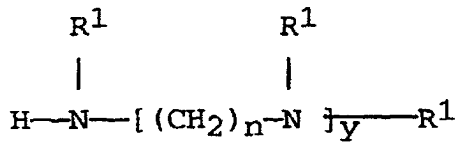 X

in situ durch reduktive Alkylierung von Aminen durch Umsetzung derselben mit Aldehyden und Ameisensäure hergestellt werden.

**13.** Verfahren nach einem der Patentansprüche 7 bis 12, **dadurch gekennzeichnet, dass** bei der Herstellung des Härtungsmittels die einzelnen Addukte getrennt oder im Eintopfverfahren nacheinander bei Temperaturen von 20 bis 120°C, vorzugsweise 50 bis 90°C, hergestellt werden.

**14.** Verfahren gemäss einem der Ansprüche 7 bis 13, **dadurch gekennzeichnet, dass** die Polyalkylenpolyamingruppierung der Formel II die folgende Gruppierung ist:

$$-NH-CH_2-CH_2-CH_2-NH-CH_2-CH_2-NH-CH_2-CH_2-CH_2-NHR^1$$

worin $R^1$ die Bedeutung Methyl, Ethyl, n-Propyl, Isopropyl, Butyl und Benzyl hat

**15.** Verfahren gemäss einem der Ansprüche 10 bis 14, **dadurch gekennzeichnet, dass** das Polyalkylenpolyamin der Formel X das folgende Polyamin ist:

$$H_2N-CH_2-CH_2-CH_2-NH-CH_2-CH_2-NH-CH_2-CH_2-CH_2-NH_2$$

**16.** Verwendung der Härtungsmittel gemäss einem der Ansprüche 1 bis 6 zur Härtung von polyfunktionellen wässrigen Epoxidharzdispersionen, **dadurch gekennzeichnet, dass** man die Härtungsmittel mit der wässrigen Epoxidharzdispersion vermischt.

**17.** Verwendung gemäss Anspruch 16, **dadurch gekennzeichnet, dass** man eine wässrige Epoxidharzdispersion, die gegebenenfalls als weitere Komponente Füllstoffe und/oder Pigmente enthält, mit einem entsprechenden Härtungsmittel, das als weitere Komponente Wasser enthält und in Form einer Mikroemulsion vorliegt, vorzugsweise als Oel in Wasser Mikroemulsion, vermischt und die Mischung auf ein Substrat aufträgt oder zur Auffüllung von Hohlräumen einsetzt, wobei nach der Vermischung der Epoxidharzdispersion mit der wässrigen Mikroemulsion des Härters die Aushärtung erfolgt.

**18.** Verwendung gemäss Anspruch 16, **dadurch gekennzeichnet, dass** man ein entsprechendes Härtungsmittel, das als weitere Komponente Wasser enthält und in Form einer Mikroemulsion vorliegt, vorzugsweise als Oel in Wasser Mikroemulsion, zur Härtung einer wässrigen Epoxidharzdispersion einsetzt, die als Zusatz zu einem Baustoff verwendet wird, der als weitere Komponente ein anorganisches Bindemittel enthält, welches aus der Gruppe ausgewählt ist, die Zement, Kalk, Gips und Mischungen derartiger anorganischer Bindemittel umfasst, und wobei in dem Baustoff gegebenenfalls noch Wasser, Zuschlagstoffe, beispielsweise Sand oder Kies, und weitere in Beton, beziehungsweise Mörtel übliche Zusatzstoffe enthalten sind.

**19.** Verwendung nach Anspruch 18, **dadurch gekennzeichnet, dass** die Mischung als weitere Komponente mindestens eine solche enthält, die aus der Gruppe ausgewählt ist, welche Verflüssiger, Hochleistungsverflüssiger, Porenbildner, Abbindebeschleuniger, Abbindeverzögerer für das in der Mischung enthaltene anorganische Bindemittel, wie Zement, Flugasche, Hochofenschlacke, gebrannten Oelschiefer, amorphes Siliziumdioxid, wie Silica fume, und Thixotropiermittel umfasst.

## Claims

**1.** Curing agent for aqueous epoxy resin dispersions that contains amino groups, **characterized in that** it contains the following components:

10 to 80 % by weight of a at least one emulsifier that includes in its molecule at least one polyalkylenepolyetherdiamine grouping of formula I

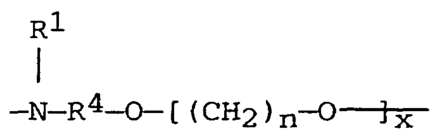 I

wherein the groups

$R^1$ independent from each other represent hydrogen atoms or linear or branched alkyl groups with 1-6 carbon atoms that optionally carry a phenyl group as substituent,

the groups

$R^4$ independent from each other represent an alkylene grouping with 1-8 carbon atoms,

n is an integer in the range of 1-5 and

x is an integer in the range of 8-90,

whereby the grouping of formula I is bound to a basic structure of formula IV

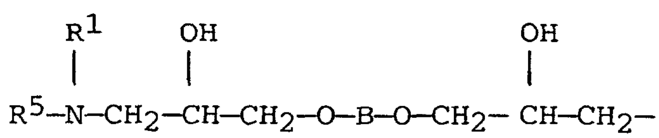 IV

wherein

$R^5$ is an alkyl group with 7-25 carbon atoms or represents an aliphatic polyamine group of formula

$$R_6-Y-(NH-CH_2-CH_2)_z$$

wherein

$R_6$ is an alkyl group with 7-25 carbon atoms,

Y is a direct linkage or represents the group

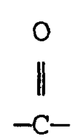

and

Z is an integer in the range of 1-4,

B is an alkylen group, an alkylene group having one or more ether oxygen atoms in its chain, or a bivalent cycloaliphatic or aromatic or araliphatic group,

1-80 % by weight of at least one coemulsifier having in its molecule at least one polyalkylenepolyamine grouping of formula II

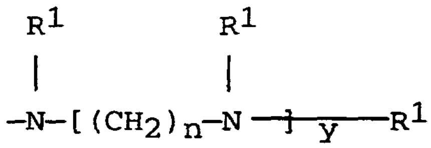

II

wherein the groups

$R^1$ and the symbol n independent from each other have the same meaning as in the groupings of formula I, and

y is an integer in the range of 1-6,

whereby the polyalkylenepolyamine grouping of formula II is linked to a basic structure of formula IV

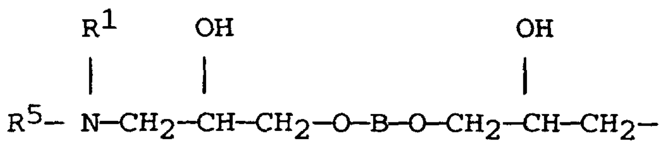

IV

wherein

$R^5$ represents an alkyl group with 7-25 carbon atoms or an aliphatic polyamine group of formula

$$R_6-Y-(-NH-CH_2-CH_2)_z-$$

wherein

$R_6$ is an alkyl group with 7-25 carbon atoms

Y is a direct linkage or the group

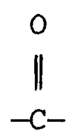

and

z is an integer in the range of 1-4, and

B is an alkylene group, an alkylene group having one or more ether oxygen atoms in its chain, or a bivalent cycloaliphatic, aromatic or araliphatic group, and

5-80 % by weight of at least one bis(diamine)diepoxide adduct comprising in its molecule at least two epoxidediamine adduct groups of formula III

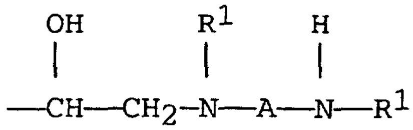 III

wherin

$R^1$ has the same meaning as in formula I, and

A is an alkylene group, a cycloalkylene group, a polyalkylenepolyether group or a bivalent group comprising alkyl groups as well as cycloalkyl groups and/or aromatic groups,

whereby the two groupings of formula III are linked to a bivalent basic structure of formula V

$$-CH_2\text{-}O\text{-}B\text{-}O\text{-}CH_2- \qquad V$$

whereby in said structure

B is an alkylene group, an alkylene group having one or more ether oxygene atoms in its chain, or a bivalent cycloaliphatic or aromatic or araliphatic group,

and whereby the two groupings of formula III that are linked to this bivalent basic structure are the same or different from each other, and

whereby upon addition of water said mixture spontaneously forms a micro-emulsion.

**2.** Curing agent according to claim 1, **characterized in that** the basic structure of formula IV is identical in the emulsifier and in the coemulsifier.

**3.** Curing agent according to claim 1 or 2, **characterized in that** as a further component it contains a diamine or a mixture of two or more diamines, and whereby the curing agent has the following compositions:

10-80 % by weight of at least one emulsifier
1-80 % by weight of at least one coemulsifier
5-80 % by weight of the at least one bis(diamine)diepoxide adduct and
1-80 % by weight of the diamine or the mixture of two or more diamines.

**4.** Curing agent according to claim 3, **characterized in that** said diamine is a two primary amino groups comprising diamine of formula VI

$$H_2N\text{-}B\text{-}NH_2 \qquad VI$$

whereby in this formula

B is an alkylene group, an alkylene group having one or more ether oxygen atoms in its chain, or a bivalent cycloaliphatic or aromatic group or an alkyl as well as cycloalkyl and/or aromatic groups comprising group.

**5.** Curing agent according to one of the claims 1-4, **characterized in that** it contains water as a further component and **in that** it is a non-ionic micro-emulsion, preferably an oil in water micro-emulsion.

**6.** Curing agent according to anyone of claims 1 to 5, **characterized in that** the polyalkylenepolyamine grouping of formula II is the following grouping:

$$-NH\text{-}CH_2\text{-}CH_2\text{-}CH_2\text{-}NH\text{-}CH_2\text{-}CH_2\text{-}NH\text{-}CH_2\text{-}CH_2\text{-}CH_2\text{-}NHR^1$$

wherein $R^1$ signifies methyl, ethyl, n-propyl, isopropyl, butyl and benzyl.

**7.** Method for the production of the curing agent according to anyone of claims 1-6, **characterized in that**

10-80 % by weight of at least one emulsifier,
1-80 % by weight of at least one coemulsifier,
5-80 % by weight of at least one bis(diamine)diepoxide adduct

are mixed, or the mixture is produced according to a one pot procedure wherein successively first an emulsifier, then a coemulsifier and finally a bis(diamine)diepoxide adduct are generated, whereby in the emulsifier the polyalkylenepolyetherdiamine grouping of formula I

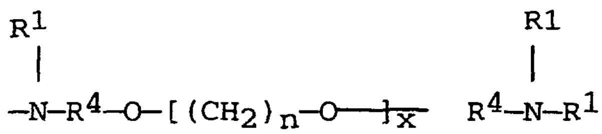 I

is linked to a basic structure of formula IV

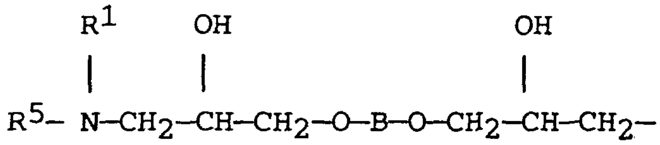 IV

whereby in the polyalkylenepolyetherdiamine grouping of formula I the groups $R^1$, $R^4$, n and x have the same meaning as in claim 1, and n preferably is 2 or 3, and in the basic structure IV

$R^5$ is an alkyl group with 7-25 carbon atoms or an aliphatic polyamine group of formula

$$R_6-Y-(NH-CH_2-CH_2)_z-$$

wherein

$R^6$ is an alkyl group with 7-25 carbon atoms,

Y is a direct linkage or the group

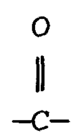

and

Z is an integer in the range of 1-4,

B is an alkylene group, an alkylene group having one or more ether oxygen atoms in its chain, or a bivalent cycloaliphatic or aromatic or araliphatic group,

in the coemulsifier a polyalkylenepolyamine grouping of formula II

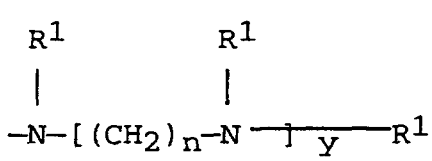 II

is linked to a basic structure of formula IV

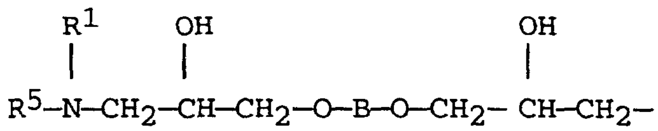

IV

whereby in the polyalkylenepolyamine grouping of formula II, $R^1$, n and y have the same meaning as in claim 1, and in the basic structure of formula IV

$R^5$ is an alkyl group with 7-25 carbon atoms or an aliphatic polyamine group of the formula

$$R_6-Y-(NH-CH_2-CH_2)_z-$$

wherein

$R_6$ is an alkyl group with 7-25 carbon atoms,

Y is a direct linkage or the group

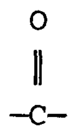

and

z is an integer in the range of 1-4,

B is an alkylene group, an alkylene group having one or more ether oxygen atoms in its chain, or a bivalent cycloaliphatic or aromatic or araliphatic group,

and whereby the bis(diamine diepoxide adduct comprises in its molecule two epoxidediamine adduct groups of formula III

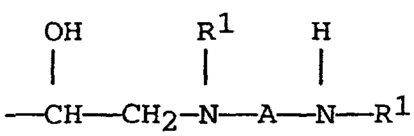

III

linked to a bivalent basic structure of formula V

$$-CH_2-O-B-O-CH_2- \qquad V$$

whereby in the epoxidediamine adduct groups of formula III the groups

$R^1$ and A have the same meaning as in claim 1 and in the bivalent basic structure of formula V

B is an alkylene group, an alkylene group having one or more ether oxygen atoms in its chain, or a bivalent cycloaliphatic or aromatic or araliphatic group, and

whereby the two groupings of formula III that are linked to said bivalent basic structure are the same or different from each other.

8. Method according to claim 7, **characterized in that** subsequently additional 1-80 % by weight of a diamine are added.

**9.** Method according to claim 7 or 8, **characterized in that** furthermore water is added with formation of a microemulsion.

**10.** Method according to one of claims 7 to 9, **characterized in that** the emulsifier is produced **in that** an alkylmonoamine and/or alkylpolyamine of formula VII

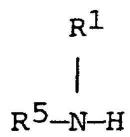

VII

is reacted with a diepoxide of formula VIII

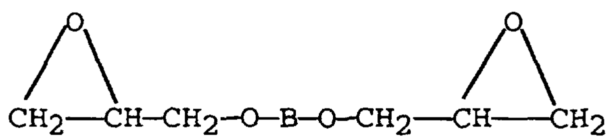

VIII

and a polyalkylenepolyetherdiamine of formula IX

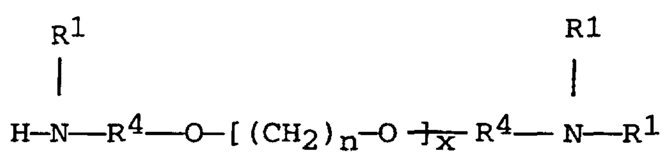

IX

the coemulsifier is produced **in that** an alkylmonoamine and/or alkylpolyamine of formula VII

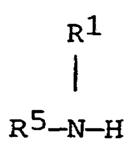

VII

is reacted with a diepoxide compound of formula VIII

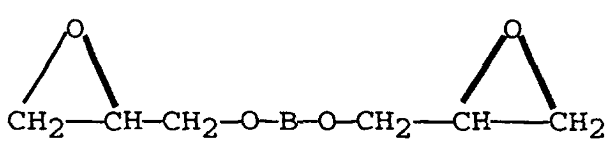

VIII

and a polyalkylenepolyamine of formula X

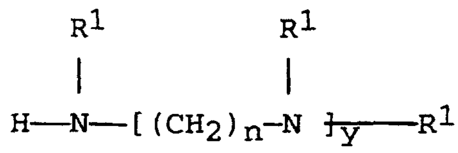

X

and the bis(diamine)diepoxide adduct is produced **in that** one or more diamines of formula XI

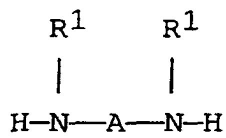

XI

are reacted with a diepoxide of formula VIII

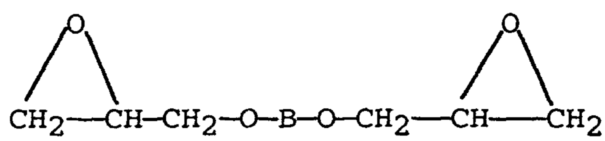

VIII

**11.** Method according to one of claims 7 to 10, **characterized in that** the curing agent is produced by means of the one pot procedure.

**12.** Method according to one of claims 7 to 11, **characterized in that** the diamine or polyamine substituents of the emulsifier and the coemulsifier that preferably are derived from polyamines of formula IX and X

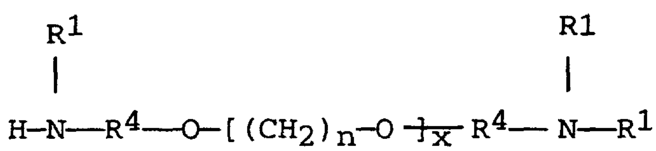

IX

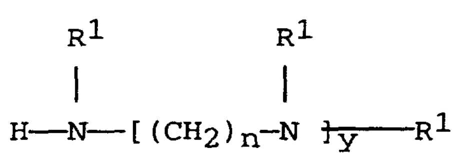

X

are produced in situ by reducing alkylation of amines through reaction thereof with aldehydes and formic acid.

**13.** Method according to one of claims 7 to 12, **characterized in that** for the production of the curing agent the individual adducts are produced separately or in the one pot procedure, one after the other, at temperatures of 20 to 120°C, preferably 50 to 90°C.

**14.** Method according to one of claims 7 to 13, **characterized in that** the polyalkylenepolyamine grouping of formula II is the following grouping

$$-NH-CH_2-CH_2-CH_2-NH-CH_2-CH_2-NH-CH_2-CH_2-CH_2-NHR^1$$

wherein $R^1$ is methyl, ethyl, n-propyl, isopropyl, butyl and benzyl.

**15.** Method according to one of claims 10 to 14, **characterized in that** the polyalkylenepolyamine of formula X is the following polyamine:

$$H_2N-CH_2-CH_2-CH_2-NH-CH_2-CH_2-NH-CH_2-CH_2-CH_2-NH_2$$

**16.** Use of the curing agent according to one of claims 1 to 6 for curing polyfunctional aqueous epoxy resin dispersions, **characterized in that** the curing agents are mixed with the aqueous epoxy resin dispersion.

**17.** Use according to claim 16, **characterized in that** an aqueous epoxy resin dispersion, optionally containing filler and/or pigments as further components, is mixed with a respective curing agent containing water as a further component and being present in the form of a micro-emulsion, preferably as oil in water micro-emulsion, and that the mixture is applied to a substrate or used for filling cavities, whereby after the mixing of the epoxy resin dispersion with the aqueous micro-emulsion of the curing agent the curing occurs.

**18.** Use according to claim 16, **characterized in that** a respective curing agent that as a further component contains water and is present in the form of a micro-emulsion, preferably as an oil in water micro-emulsion, is used for curing an aqueous epoxy resin dispersion that is used as admixture to a building material that contains as further component an inorganic binder selected from the group comprising cement, lime, gypsum and mixtures of such inorganic binders, and whereby said building material may optionally also comprise water, aggregates, for example sand or gravel, and further additives usual for concrete or mortar.

**19.** Use according to claim 18, **characterized in that** the mixture contains as further component at least one component selected from the group comprising water-reducers, high-range water-reducers, pore builders, setting accelerators, setting retarders for the inorganic binder comprised in the mixture such as cement, fly-ash, blast furnace slag, burned oil-shale, amorphous silica, such as silica-fume, and thixotropic agents.

## Revendications

**1.** Durcisseur de dispersions aqueuses de résine époxyde qui a des groupes amino, **caractérisé en ce qu'**il comprend les constituants suivants :

de 10 à 80 % en poids d'au moins un émulsionnant qui a, dans sa molécule, au moins un groupement polyacoylènepolyétheroxyde-diamine de formule I

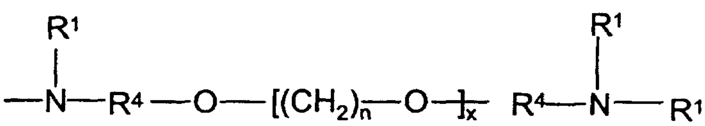

I

dans laquelle les radicaux

$R^1$ représentent indépendamment les uns des autres des atomes d'hydrogène ou des radicaux alcoyle à chaîne linéaire ou ramifiée ayant de 1 à 6 atomes de carbone, qui portent, le cas échéant, comme substituant un radical phényle,

les radicaux.

$R^4$ signifient indépendamment l'un de l'autre un groupement alcoylène ayant de 1 à 8 atomes de carbone,
n signifie un nombre entier dans l'intervalle de 1 à 5, et

x signifie un nombre entier dans l'intervalle de 8 à 90,

le groupement de formule I étant lié à une structure de base de formule IV

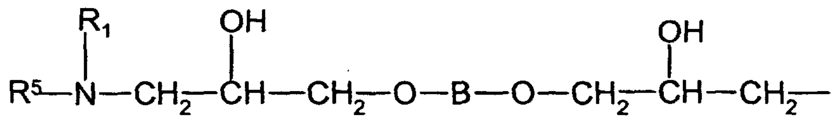 IV

dans laquelle,

$R^5$ représente un radical alcoyle ayant de 7 à 25 atomes de carbone ou un radical polyamine aliphatique de formule

$$R_6—Y—(NH—CH_2—CH_2)_z—$$

dans laquelle,

$R_6$ signifie un radical alcoyle ayant de 7 à 25 atomes de carbone

Y signifie une simple liaison ou le groupe

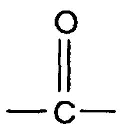

et,

z est un nombre entier dans l'intervalle de 1 à 4,
B est un radical alcoylène, un radical alcoylène ayant dans la chaîne un ou plusieurs atomes d'oxygène d'étheroxyde ou un radical bivalent cycloaliphatique ou aromatique ou araliphatique,

de 1 à 80 % en poids d'au moins un coémulsionnant qui a, dans sa molécule, au moins un groupement polyalcoylènepolyamine de formule II

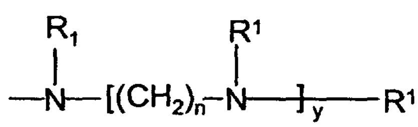 II

dans laquelle les radicaux,

$R^1$ et le symbole n, ont indépendamment les uns des autres la même signification que dans les groupements de formule I, et
Y signifie un nombre entier dans l'intervalle de 1 à 6,

le groupement polyalcoylènepolyamine de formule II étant lié à une structure de base de formule IV

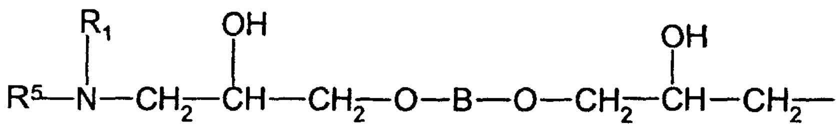 IV

dans laquelle,

$R^5$ représente un radical alcoyle ayant de 7 à 25 atomes de carbone ou un radical polyamine aliphatique de formule

$$R_6-Y-(NH-CH_2-CH_2)_z-$$

dans laquelle,

$R^6$ signifie un radical alcoyle ayant de 7 à 25 atomes de carbone,

Y signifie une liaison simple ou le groupe

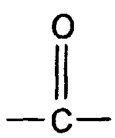

et,

z est un nombre entier de l'ordre de 1 à 4, et

B est un radical alcoylène, un radical alcoylène ayant dans la chaîne un ou plusieurs atomes d'oxygène étheroxyde ou un radical bivalent cycloaliphatique ou aromatique ou araliphatique, et

de 5 à 80 % en poids d'au moins un adduit de bis(diamine)diépoxyde qui a, dans sa molécule, au moins deux groupes d'adduit d'époxydediamine de formule III
dans laquelle,

$R^1$ a la même signification qu'à la formule I, et

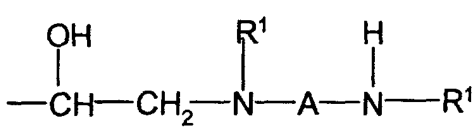 III

dans laquelle,

R1 à la même signification qu'à la formule I, et

A est un radical alcoylène, un radical cycloalcoylène, un radical polyalcoylènepolyétheroxyde ou un radical bivalent ayant à la fois des groupes alcoyle et des groupes cycloalcoyle et/ou des groupes aromatiques,

les deux groupements de formule III étant liés à une structure de base bivalente de formule V

$$-CH_2-O-B-O-CH_2- \qquad V$$

et dans cette structure,

B est un radical alcoylène, un radical alcoylène ayant dans la chaîne un ou plusieurs atomes d'oxygène d'étheroxyde ou un radical bivalent cycloaliphatique ou aromatique ou un araliphatique,

et les deux groupements de formule III, qui sont reliés à cette structure de base bivalente sont identiques entre eux ou sont différents et, le mélange formant par addition d'eau spontanément une micro-émulsion.

**2.** Durcisseur suivant la revendication 1, **caractérisé en ce que** la structure de base de formule IV est identique dans l'émulsionnant et dans le coémulsionnant.

**3.** Durcisseur suivant la revendication 1 ou 2, **caractérisé en ce qu'**il comprend comme autre constituant encore une diamine ou un mélange de deux ou de plusieurs diamines et le durcisseur a la composition suivante :

de 10 à 80 % en poids d'au moins un émulsionnant
de 1 à 80 % en poids d'au moins un coémulsionnant
de 5 à 80 % en poids du au moins un adduit de bis(diamino)-diépoxyde et,
de 1 à 80 % en poids de la diamine ou du mélange de deux ou de plusieurs diamines.

**4.** Durcisseur suivant la revendication 3, **caractérisé en ce que** la diamine est une diamine ayant deux groupes amino primaires et répondant à la formule VI

$$H_2N-B-NH_2 \qquad VI$$

et dans cette formule,

B est un radical alcoylène, un radical alcoylène ayant dans la chaîne un ou plusieurs atomes d'oxygène d'étheroxyde ou un radical bivalent cycloaliphatique ou aromatique ou ayant à la fois des groupes alcoyle et cycloalcoyle et/ou des groupes aromatiques.

**5.** Durcisseur suivant l'une des revendications 1 à 4, **caractérisé en ce qu'**il comprend comme autre constituant de l'eau et **en ce qu'**il se présente sous la forme d'une micro-émulsion non ionique, de préférence d'une micro-émulsion huile-dans-eau.

**6.** Durcisseur suivant l'une des revendications 1 à 5, **caractérisé en ce que** le groupement polyalcoylènepolyamine de formule II est le groupement suivant,

$$-NH-CH_2-CH_2-CH_2-NH-CH_2-CH_2-NH-CH_2-CH_2-CH_2-NHR^1$$

dans laquelle $R^1$ a la signification méthyle, éthyle, propyle normal, isopropyle, butyle et benzyle.

**7.** Procédé de préparation du durcisseur suivant l'une des revendications 1 à 6, **caractérisé en ce que** l'on mélange

de 10 à 80 % en poids d'au moins un émulsionnant,
de 1 à 80 % en poids d'au moins un coémulsionnant,
de 5 à 80 % en poids d'au moins un adduit de bis(diamine)diépoxyde ou l'on prépare le mélange par un procédé à un seul pot, dans lequel on produit successivement d'abord un émulsionnant, ensuite un coémulsionnant et finalement un adduit de bis(diamino)diépoxyde,

dans l'émulsionnant le groupement polyalcoylènepolyétheroxyde-diamino de formule I

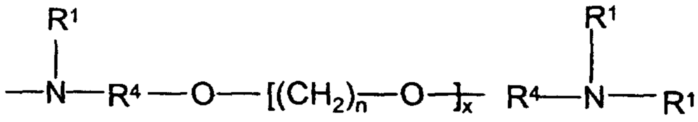 I

étant relié à une structure de base de formule IV

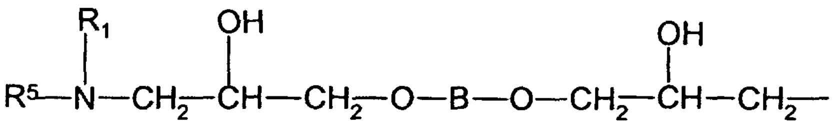 IV

dans le groupement polyalcoylènepolyétheroxyde-diamino de formule I des radicaux $R^1$, $R^4$, n et x ayant la même signification qu'à la revendication 1, et n est de préférence 2 ou 3, et dans la structure de base IV,

$R^5$ représente un radical alcoyle ayant de 7 à 25 atomes de carbone ou un radical polyamine aliphatique de formule

$$R_6-Y-(NH-CH_2-CH_2)_z-$$

dans laquelle,

$R^6$ signifie un radical alcoyle ayant de 7 à 25 atomes de carbone,
Y signifie une simple liaison ou le groupe

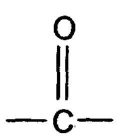

et,

z est un nombre entier de l'ordre de 1 à 4,
B est un radical alcoylène, un radical alcoylène ayant dans la chaîne un ou plusieurs atomes d'oxygène étheroxyde ou un radical bivalent cycloaliphatique ou aromatique ou araliphatique,

Dans le coémulsionnant un groupement polyacoylènepolyamine de formule II

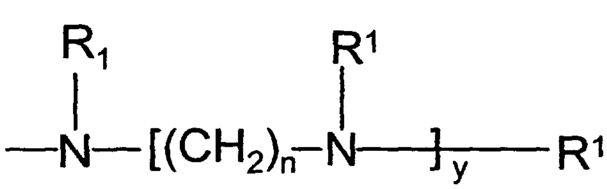 II

est relié à une structure de base de formule IV

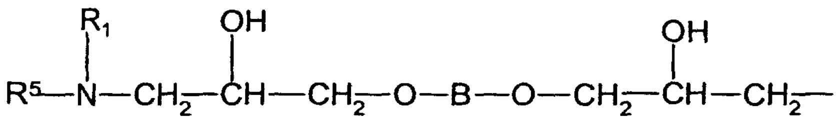

IV

dans laquelle dans le groupe polyalcoylènepolyamine de formule II, $R^1$, N et Y ont la même signification qu'à la revendication 1 et dans la structure de base de formule IV dans laquelle

$R^5$ représente un radical alcoyle ayant de 7 à 25 atomes de carbone ou un radical polyamine aliphatique de formule

$$R_6-Y-(NH-CH_2-CH_2)_z-$$

dans laquelle,

$R^6$ signifie un radical alcoyle ayant de 7 à 25 atomes de carbone,
Y signifie une liaison simple ou le groupe

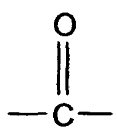

et,

z est un nombre entier de l'ordre de 1 à 4, et
B est un radical alcoylène, un radical alcoylène ayant dans la chaîne un ou plusieurs atomes d'oxygène étheroxyde ou un radical bivalent cycloaliphatique ou aromatique ou araliphatique,

et l'adduit de bisdiaminodiépoxyde a, dans sa molécule, deux groupes d'adduits d'époxydediamino de formule III reliés à une structure de base bivalente de formule V

$$-CH_2-O-B-O-CH_2- \qquad V$$

et dans les groupes d'adduit d'époxydediamino de formule III, les groupes,

$R^1$ et A ont la même signification qu'à la revendication 1, et dans la structure de base bivalente de formule V,
B est un radical alcoylène, un radical alcoylène ayant dans la chaîne un ou plusieurs atomes d'oxygène étheroxyde ou un radical bivalent cycloaliphatique ou aromatique ou araliphatique, et

les deux groupements de formule III qui sont reliés à cette structure de base bivalente sont identiques entre eux ou sont différents.

8. Procédé suivant la revendication 7, **caractérisé en ce qu'**on ajoute ensuite en plus de 1 à 80 % en poids d'une diamine.

9. Procédé suivant la revendication 7 ou 8, **caractérisé en ce qu'**on ajoute en outre de l'eau avec formation d'une micro-émulsion.

**10.** Procédé suivant l'une des revendications 7 à 9, **caractérisé en ce que** l'on prépare l'émulsionnant en faisant réagir une alcoylmonoamine et/ou une alcoylpolyamine de formule VII

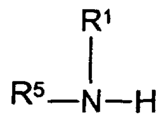

VII

sur un diépoxyde de formule VIII

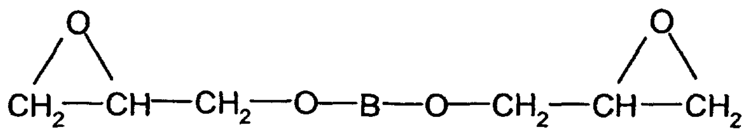

VIII

et sur une polyacoylènepolyétheroxyde-diamine de formule IX

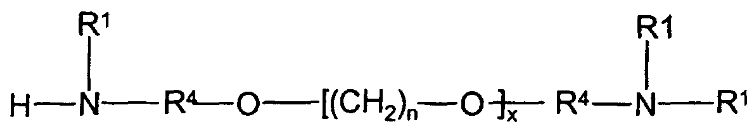

IX

le coémulsionnant en faisant réagir une alcoylmonoamine et/ou une alcoylpolyamine de formule VII

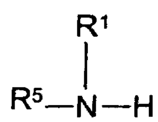

VII

sur un composé diépoxyde de formule VIII

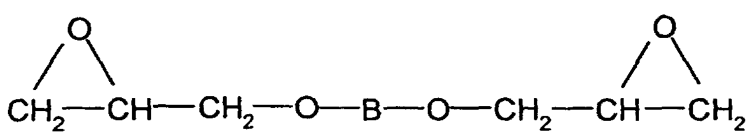

VIII

et une polyalcoylènepolyamine de formule X

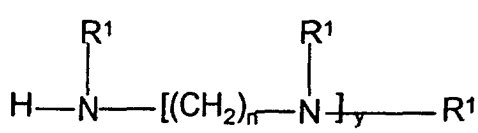

X

et,

l'adduit de bis(diamino)diépoxyde en faisant réagir une ou plusieurs diamines de formule XI

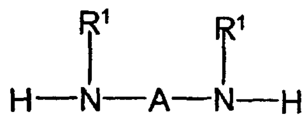

XI

sur un diépoxyde de formule VIII

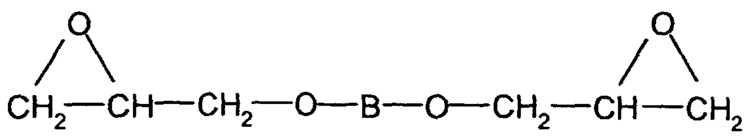

VIII

**11.** Procédé suivant l'une des revendications 7 à 10, **caractérisé en ce que** l'on prépare le durcissement suivant un procédé à un seul pot.

**12.** Procédé suivant l'une des revendications 7 à 11, **caractérisé en ce que** l'on prépare les substituants diamino ou polyamino de l'émulsionnant ou du coémulsionnant qui dérivent de préférence de polyamines de formule IX et X,

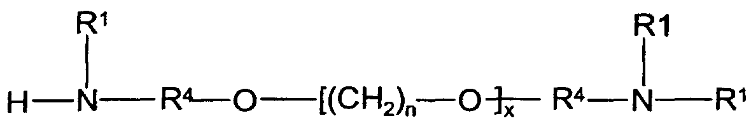

IX

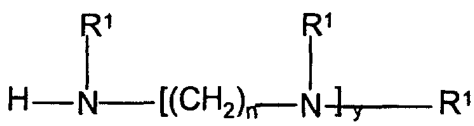

X

in situ par alcoylation réductive d'amines par réaction de celles-ci sur des aldéhydes et de l'acide formique.

**13.** Procédé suivant l'une des revendications 7 à 12, **caractérisé en ce que** lors de la séparation du durcisseur, on prépare les divers adduits séparément ou dans un procédé à un seul pot successivement à des températures de 20 à 120°C, de préférence de 50 à 90°C.

**14.** Procédé suivant l'une des revendications 7 à 13, **caractérisé en ce que** le groupement polyalcoylènepolyamine de formule II est le groupement suivant

$$-NH-CH_2-CH_2-CH_2-NH-CH_2-CH_2-NH-CH_2-CH_2-CH_2-NHR^1$$

dans laquelle,

$R^1$ a la signification méthyle, éthyle, propyle normal, isopropyle, butyle, et benzyle.

**15.** Procédé suivant l'une des revendications 10 à 14, **caractérisé en ce que** la polyalcoylènepolyamine de formule X est la polyamine suivante.

$$H_2N\text{-}CH_2\text{-}CH_2\text{-}CH_2\text{-}NH\text{-}CH_2\text{-}CH_2\text{-}NH\text{-}CH_2\text{-}CH_2\text{-}CH_2\text{-}NH_2$$

**16.** Utilisation du durcisseur suivant l'une des revendications 1 à 6, pour durcir des dispersions aqueuses polyfonctionnelles de résine époxyde, **caractérisée en ce que** l'on mélange le durcisseur à la dispersion aqueuse de résine époxyde.

**17.** Utilisation suivant la revendication 16, **caractérisée en ce que** l'on mélange une dispersion aqueuse de résine époxyde qui contient éventuellement comme autre constituant des charges et/ou des pigments à un durcisseur adéquat qui contient comme autre constituant de l'eau et qui se présente sous la forme d'une micro-émulsion, de préférence sous la forme d'une micro-émulsion huile dans eau et on applique le mélange sur un substrat où on l'utilise pour remplir des cavités, le durcissement s'effectuant après le mélange de la dispersion de résine époxyde à la micro-émulsion aqueuse du durcisseur.

**18.** Utilisation suivant la revendication 16, **caractérisée en ce que** l'on utilise un durcisseur adéquat qui contient comme autre constituant de l'eau et qui se présente sous la forme d'une micro-émulsion, de préférence d'une micro-émulsion huile-dans-eau pour durcir une dispersion aqueuse de résine époxyde qui est utilisée comme additif à une matière de construction qui contient comme autre constituant un liant minéral choisi dans le groupe qui comprend le ciment, la chaux, le plâtre et des mélanges de liants minéraux de ce genre, et il est contenu dans la matière de construction le cas échéant encore de l'eau, des additifs, par exemple du sable ou du grès et d'autres additifs habituels dans le béton ou le mortier.

**19.** Utilisation suivant la revendication 18, **caractérisée en ce que** le mélange contient comme autre constituant au moins l'un de ceux qui sont choisis dans le groupe qui comprend des fluidifiants, des fluidifiants de grande puissance, des agents porogènes, des accélérateurs de prise, des retardateurs de prise pour le liant minéral contenu dans le mélange comme du ciment, de la cendre volante, du laitier de pot fourneau, des schistes bitumineux brûlés, du dioxyde de silicium amorphe comme de la silice fumée et des agents thixotropes.